# EUROPEAN PATENT APPLICATION

(11) **EP 4 794 401 A1**
(43) Date of publication of application: **19.08.2026**
(21) Application number: 23960596.7
(22) Date of filing: 08.12.2023
(51) Int. Cl.: H04W 52/02

(54) **WIRELESS COMMUNICATION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Penza, Giancarlo
(86) International application number: PCT/CN2023/137562
(87) International publication number: WO 2025/118285

(57) **Abstract**

The present application provides a wireless communication method, a device, and a storage medium. The method comprises: a terminal device receives a low power wake-up signal (LP-WUS) sent by a network device, wherein the LP-WUS is used for controlling a master receiver (MR) of the terminal device to monitor a physical downlink control channel (PDCCH) on one or more first serving cells, and a plurality of serving cells of the terminal device comprise the one or more first serving cells.

## Description

### TECHNICAL FIELD

Embodiments of the present disclosure relate to the field of mobile communication technologies, in particular to a wireless communication method, a device and a storage medium.

### BACKGROUND

In a new radio (NR) system, a low power wake-up signal (LP-WUS) is introduced. A terminal device uses a lower power receiver to receive the LP-WUS, and after receiving the LP-WUS, activates a main radio to monitor downlink signals, so as to achieve the purposes of power saving.

After the introduction of the LP-WUS, from the perspective of a terminal device, camping on a cell that support the LP-WUS allows the main radio to be turned off compared to camping on a conventional cell, thus achieving greater power saving effects.

### SUMMARY

The embodiments of the present disclosure provide a wireless communication method, a device, and a storage medium.

A wireless communication method provided by the embodiments of the present disclosure includes the following operation.

A terminal device receives a low power wake-up signal (LP-WUS) transmitted by a network device. Here, the LP-WUS is used for controlling monitoring of physical downlink control channel (PDCCH) by a main radio (MR) of the terminal device on one or more first serving cells, and multiple serving cells of the terminal device include the one or more first serving cells.

A wireless communication method provided by the embodiments of the present disclosure includes the following operation.

A network device transmits a low power wake-up signal (LP-WUS) to a terminal device. Here, the LP-WUS is used for controlling transmission of physical downlink control channel (PDCCH) by the network device on one or more first serving cells, and multiple serving cells of the terminal device include the one or more first serving cells.

A terminal device provided by the embodiments of the present disclosure includes a first communication unit, configured to receive a low power wake-up signal (LP-WUS) transmitted by a network device. Here, the LP-WUS is used for controlling monitoring of physical downlink control channel (PDCCH) by a main radio (MR) of the terminal device on one or more first serving cells, and multiple serving cells of the terminal device include the one or more first serving cells.

A network device provided by the embodiments of the present disclosure includes a second communication unit, configured to transmit a low power wake-up signal (LP-WUS) to a terminal device. Here, the LP-WUS is used for controlling transmission of physical downlink control channel (PDCCH) by the network device on one or more first serving cells, and multiple serving cells of the terminal device include the one or more first serving cells.

A communication device provided by the embodiments of the present disclosure may be the terminal device in the above solutions or the network device in the above solutions. The communication device includes a processor and a memory. The memory is configured to store a computer program, and the processor is configured to call and execute the computer program stored in the memory to perform the above-described wireless communication method.

A chip provided by the embodiments of the present disclosure is configured to implement the above-described wireless communication method.

Specifically, the chip includes a processor for calling and executing a computer program from a memory to cause a device equipped with the chip to perform the above-described wireless communication method.

A computer-readable storage medium provided by the embodiments of the present disclosure stores a computer program that causes a computer to perform the above-described wireless communication method.

A computer program product provided by the embodiments of the present disclosure includes computer program instructions that cause a computer to perform the above-described wireless communication method.

A computer program provided by the embodiments of the present disclosure causes a computer to perform the above-described wireless communication method when it is executed on the computer.

According to the above technical solutions, when the terminal device receives the LP-WUS transmitted by the network device, the terminal device controls monitoring, by the MR, of PDCCH on one or more first serving cells among multiple serving cells of the terminal device based on the received LP-WUS. On the one hand, this enables the network device to transmit the LP-WUS according to the service transmission requirements. On the other hand, after receiving the LP-WUS, the terminal device controls monitoring of PDCCH for scheduling the corresponding service on the corresponding serving cell, thereby reducing the service latency while reducing the power consumption of the terminal device as much as possible.

### BRIEF DESCRIPTION OF THE DRAWINGS

The accompanying drawings described herein are used to provide a further understanding of the present disclosure and constitute a part of the present disclosure. The schematic embodiments of the present disclosure and the description thereof are used to explain the present disclosure and do not constitute an improper limitation of the present disclosure. In the drawings:
FIG. 1 is a diagram of an application scenario according to an embodiment of the present disclosure.
FIG. 2 is a diagram of a discontinuous reception (DRX) cycle according to an embodiment of the present disclosure.
FIG. 3 is an optional diagram of transmission of LP-WUS provided by an embodiment of the present disclosure.
FIG. 4 is an optional diagram of transmission of LP-WUS provided by an embodiment of the present disclosure.
FIG. 5 is an optional flowchart of a wireless communication method provided by an embodiment of the present disclosure.
FIG. 6 is an optional flowchart of a wireless communication method provided by an embodiment of the present disclosure.
FIG. 7 is an optional flowchart of a wireless communication method provided by an embodiment of the present disclosure.
FIG. 8 is an optional structural diagram of a terminal device provided by an embodiment of the present disclosure.
FIG. 9 is an optional structural diagram of a network device provided by an embodiment of the present disclosure.
FIG. 10 is a structural diagram of a communication device provided by an embodiment of the present disclosure.
FIG. 11 is a structural diagram of a chip according to an embodiment of the present disclosure.
FIG. 12 is a block diagram of a communication system provided by an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are some embodiments of the present disclosure, but not all embodiments. Based on the embodiments in the present disclosure, all other embodiments obtained by those of ordinary skill in the art without making creative efforts fall within the scope of protection of the present disclosure.

Communication system scenarios include terrestrial network (TN) and non-terrestrial network (NTN). Here, NTN generally provides communication services to ground users by means of satellite communication. At present, NTN systems include NR-NTN and IoT-NTN systems, and may further include other NTN systems in the future.

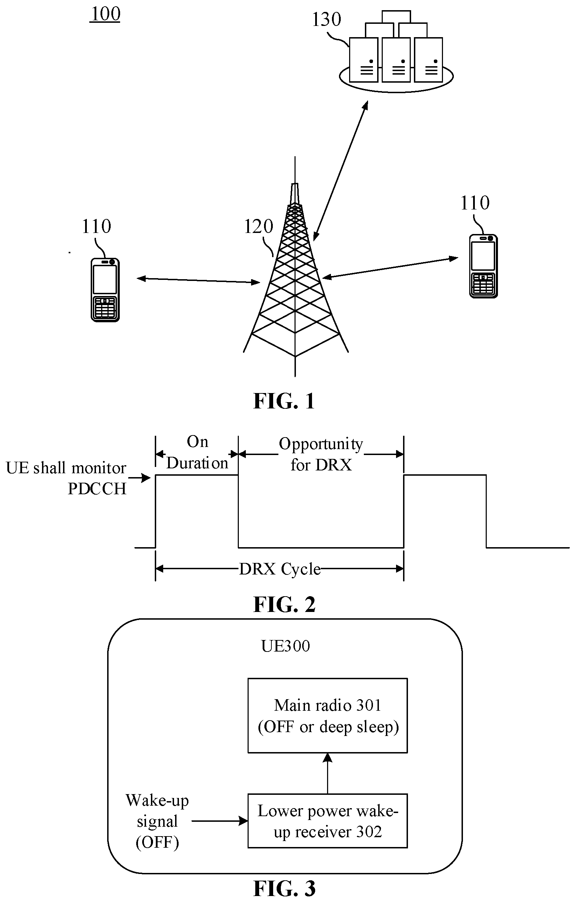

FIG. 1 is a diagram of architecture of a communication system provided by an embodiment of the present disclosure. As illustrated in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are merely illustrative of the communication system 100, but the embodiments of the present disclosure are not limited thereto. That is, the technical solutions of the embodiments of the present disclosure can be applied to various communication systems, for example, a long term evolution (LTE) system, an LTE time division duplex (TDD), a universal mobile telecommunication system (UMTS), an internet of things (IoT) system, and a narrow band internet of things (NB-IoT) system, an enhanced machine-type communications (eMTC) system, a 5G communication system (also known as a new radio (NR) communication system), or a future communication system.

In the communication system 100 illustrated in FIG. 1, the network device 120 may be an access network device that communicates with the terminal device 110. The access network device may provide communication coverage for a particular geographic area and may communicate with the terminal device 110 (e.g., a UE) located within the coverage area.

The network device 120 may be an evolutional node B (eNB or eNodeB) in a LTE system, or a next generation radio access network (NG RAN) device, or a gNB in an NR system, or a wireless controller in a cloud radio access network (CRAN). Or, the network device 120 may be a relay station, an access point, an in-vehicle device, a wearable device, a hub, a switch, a bridge, a router, or a network device in a future evolved public land mobile network (PLMN) or the like.

The terminal device 110 may be any terminal device including, but not limited to, a terminal device connected to the network device 120 or another terminal device through a wired or wireless connection.

For example, the terminal device 110 may refer to an access terminal, user equipment (UE), a user unit, a user station, a mobile station, a mobile terminal, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device with wireless communication functions, a computing device or other processing device connected to a wireless modem, an in-vehicle device, a wearable device, a terminal device in a 5G network, or a terminal device in a future evolution network, or the like.

The terminal device 110 may be used for device-to-device (D2D) communication.

The wireless communication system 100 may further include a core network device 130 that communicates with the base station. The core network device 130 may be a 5G core (5GC) device, for example, an access and mobility management function (AMF), for example, an authentication server function (AUSF), for example, a user plane function (UPF), for example, a session management function (SMF). Alternatively, the core network device 130 may also be an evolved packet core (EPC) device in an LTE network, for example, a session management function + core packet gateway (SMF + PGW-C) device. It should be understood that SMF + PGW-C can simultaneously implement the functions that SMF and PGW-C can implement. In the process of network evolution, the above-mentioned core network device may be called by other names, or called a new network entity formed by dividing the functions of the core network, which is not limited by the embodiments of the present disclosure.

The various functional units in the communication system 100 may also establish connections with each other through a next generation (NG) network interface to enable communication.

For example, the terminal device establishes an air interface connection with the access network device through a Uu interface, for transmitting user plane data and control plane signaling; the terminal device may establish a control plane signaling connection with the AMF through an NG interface 1 (N1 for short); the access network device, such as a next generation radio access base station (gNB), may establish a user plane data connection with the UPF through an NG interface 3 (N3 for short); the access network device may establish a control plane signaling connection with the AMF through an NG interface 2 (N2 for short); the UPF may establish a control plane signaling connection with the SMF through an NG interface 4 (N4 for short); the UPF may exchange user plane data with a data network through an NG interface 6 (N6 for short); the AMF may establish a control plane signaling connection with the SMF through an NG interface 11 (N11 for short); and the SMF may establish a control plane signaling connection with a policy control function (PCF) through an NG interface 7 (N7 for short).

FIG. 1 illustrates exemplarily one base station, one core network device, and two terminal devices. Optionally, the wireless communication system 100 may include multiple base station devices, and there may be a different number of terminal devices within the coverage area of each base station, which is not limited in the embodiments of the present disclosure.

It should be noted that FIG. 1 merely illustrates a system applicable to the present disclosure in the form of an example, and of course, the methods illustrated in the embodiments of the present disclosure may be applicable to other systems. Furthermore, the terms "system" and "network" are often used interchangeably herein. The term "and/or" herein merely describes an association relationship between associated objects, and indicates that there may be three relationships. For example, A and/or B, which may indicate that A exists alone, A and B exists simultaneously, and B exists alone. In addition, the character "/" herein generally indicates that the associated objects before and after this character are in an "or" relationship. It should also be understood that the "indication/indicating/indicate" mentioned in the embodiments of the present disclosure may be a direct indication, or an indirect indication, or represent that there is an association relationship. For example, A indicates B, which may mean that A directly indicates B, e.g., B may be obtained by A; or mean that A indirectly indicates B, for example, A indicates C, and B can be obtained by C; or mean that there is an association relationship between A and B. It should also be understood that the "correspondence/corresponding/correspond" mentioned in the embodiments of the present disclosure may mean that there is a direct correspondence or an indirect correspondence between the two, or may mean that there is an association relationship between the two, or may be a relationship between indicating and being indicated, configuring and being configured, or the like. It should also be understood that the "predefined/predefinition" or "predefined rules" mentioned in the embodiments of the present disclosure can be realized by storing corresponding codes, tables, or other means that can be used to indicate relevant information in advance in devices (for example, including terminal devices and network devices), and the specific implementations thereof are not limited in the present disclosure. For example, predefinition may refer to being defined in a protocol. It should also be understood that in the embodiments of the present disclosure, the "protocol" may refer to a standard protocol in the communication field, and may include, for example, an LTE protocol, an NR protocol, and related protocols applied to future communication systems, and the present disclosure is not limited thereto.

In order to facilitate understanding of the technical solutions of the embodiments of the present disclosure, the related technologies of the embodiments of the present disclosure will be described below. The following related technologies as optional solutions can be arbitrarily combined with the technical solutions of the embodiments of the present disclosure, and the solutions obtained after the combinations belong to the protection scope of the embodiments of the present disclosure.

With people's pursuit of speed, latency, high-speed mobility, and energy efficiency, as well as the diversity and complexity of services in future life, the 3rd generation partnership project (3GPP) international standards organization began to develop the 5th generation (5G). The main application scenarios of 5G include: enhanced mobile broadband (eMBB), ultra reliable and low latency communication (URLLC), and massive machine type communication (mMTC).

In a 5G network environment, in order to reduce air interface signaling, quickly resume wireless connection, and quickly restore data service, a new radio resource control (RRC) state (i.e., an RRC_INACTIVE state) is defined. The RRC_INACTIVE state is different from an RRC_IDLE state and an RRC_ACTIVE state.

RRC_IDLE state: mobility is UE-based cell selection and reselection. Paging is initiated by the core network (CN), and the paging area is configured by the CN. There is no UE access stratum (AS) context at the base station side, and no RRC connection exists.

RRC_CONNECTED state: an RRC connection exists. The UE AS context is present in both the base station and the UE. The network side knows the UE's location at a specific cell level. Mobility is network-controlled. Unicast data can be transmitted between the UE and the base station.

RRC_INACTIVE state: mobility is UE-based cell selection and reselection. A connection exists between the core network and an access network (CN-NR). The UE AS context is present in a certain base station. Paging is triggered by the radio access network (RAN), and the RAN-based paging area is managed by the RAN. The network side knows the UE's location at the RAN-based paging area level.

In NR, a network device may configure a discontinuous reception (DRX) function for a terminal device, so that the terminal discontinuously monitors the physical downlink control channel (PDCCH), so as to achieve the purpose of saving power of the terminal device. The DRX is mainly used for controlling the monitoring, by a MAC entity of the terminal device, of: a cell-radio network temporary identifier (C-RNTI), a cancel indication RNTI (CI-RNTI) (identification of cancellation in the uplink), a configured scheduling RNTI (CS-RNTI), an interruption RNTI (INT-RNTI), a slot format indication RNTI (SFI-RNTI), a semi-persistent channel state information RNTI (SP-CSI-RNTI), a transmit power control (TPC)-physical uplink control channel (PUCCH)-RNTI, a TPC-physical uplink shared channel (PUSCH)-RNTI, a TPC-SRS-RNTI, an AI-RNTI, an SL-RNTI, an SLCS-RNTI, and SL semi-persistent scheduling V-RNTI.

The basic mechanism of DRX is to configure a DRX cycle for the terminal device. As illustrated in FIG. 2, the DRX cycle consists of an On Duration and an Opportunity for DRX. During the On Duration, the terminal device monitors and receives the PDCCH. During the Opportunity for DRX, the terminal device does not receive data on the downlink channel to save power. As illustrated in FIG. 2, in the time domain, time is divided into consecutive DRX cycles.

Each MAC entity has a DRX configuration, and the configuration parameters for DRX include the following parameters.
drx-onDurationTimer: specifies the duration (i.e., the length of the On Duration) during which PDCCH needs to be monitored, starting from the starting subframe of the DRX cycle.
drx-SlotOffset: the delay for the UE to start the drx-onDurationTimer.
drx-InactivityTimer: indicates the duration during which the UE continues to monitor PDCCH (i.e., the duration that the UE continues to be in the On Duration) after the UE (i.e., terminal device) receives the PDCCH indicating uplink initial transmission or downlink initial transmission.
drx-RetransmissionTimerDL: specifies the maximum duration during which the terminal device monitors the PDCCH indicating downlink retransmission scheduling, here, each downlink HARQ process except for the broadcast process corresponds to a drx-RetransmissionTimerDL.
drx-RetransmissionTimerUL: indicates the maximum duration during which the terminal device monitors the PDCCH indicating uplink retransmission scheduling, here, each uplink HARQ process corresponds to a drx-RetransmissionTimerUL.
drx-LongCycleStartOffset: used to configure a long DRX cycle, and a subframe offset at which the long DRX cycle and a short DRX cycle start;

Short DRX Cycle: optional configuration.
drx-ShortCycle: the duration during which the UE is in the short DRX cycle (and does not receive any PDCCH), which is an optional configuration.
drx-HARQ-RTT-TimerDL: the minimum waiting time required for the terminal device to expect to receive the PDCCH indicating downlink scheduling, here, each downlink HARQ process except for the broadcast process corresponds to a drx-HARQ-RTT-TimerDL.
drx-HARQ-RTT-TimerUL: the minimum waiting time required for the terminal device to expect to receive the PDCCH indicating uplink scheduling, here, each uplink HARQ process corresponds to a drx-HARQ-RTT-TimerUL.

If the terminal device is configured with DRX, the terminal device needs to monitor PDCCH during a DRX On Duration. The DRX On Duration includes the following situations.
- Any of the five timers including drx-OnDurationTimer, drx-InactivityTimer, drx-RetransmissionTimerDL, drx-RetransmissionTimerUL, and random access ra-ContentionResolutionTimer is running.
- A scheduling request (SR) is sent on a physical uplink control channel (PUCCH) and is in a pending state.
- During the contention-based random access procedure, after successful reception of the random access response, initial transmission indicated by the PDCCH scrambled with a C-RNTI has not been received yet.

In the existing mechanisms, the DRX long DRX cycle is a default configuration and the DRX short DRX cycle is an optional configuration. For a terminal configured with the short DRX cycle, the switching manner between the long DRX cycle and the short DRX cycle is specified in the current protocol. The details are as follows.

The terminal uses the DRX short cycle when any of the following conditions are met:
- drx-InactivityTimer expires;
- the terminal receives a DRX Command MAC CE.

The terminal uses the DRX long cycle when any of the following conditions are met:
- drx-ShortCycleTimer expires;
- the terminal receives a long DRX command MAC CE.

The terminal determines the time to start drx-onDurationTimer according to whether it is currently in the short DRX cycle or the long DRX cycle. The specific provisions are as follows.

If the short DRX cycle is used and the current subframe satisfies [(SFN ×10) + subframe number] modulo (drx-ShortCycle) = (drx-StartOffset) modulo (drx-ShortCycle), or if the long DRX cycle is used and the current subframe satisfies [(SFN ×10) + subframe number] modulo (drx-LongCycle) = drx-StartOffset, then the drx-onDurationTimer is started at a time after drx-SlotOffset slots starting from the current subframe.

### Wake-up signal (WUS) in a connected state

In NR R16, a power saving signal (i.e., WUS) is introduced. The UE starts to perform blind detection of a PDCCH-based power saving signaling (PDCCH-WUS) at a time that is offset before the start of the drx-ondurationTimer corresponding to each long DRX cycle. If the PDCCH-WUS is detected and the WUS indicates that the UE should wake up, the UE starts the drx-ondurationTimer for the long DRX cycle. If the PDCCH-WUS is detected and the WUS indicates that the UE should not wake up, the UE does not start the drx-ondurationTimer.

### Search space set group (SSSG) switching and PDCCH monitoring skipping

In order to further reduce the power of the terminal in the connected state, the 3GPP introduces a PDCCH detection adaptation mechanism, including SSSG switching and PDCCH monitoring skipping.

### PDCCH monitoring skipping

Based on PDCCH triggering, it can be triggered by a DCI field of up to two bits. The DCI used is mainly a normal scheduling DCI. When triggered by the DCI, PDCCH detection occasions for a certain time domain length, i.e., a PDCCH skipping duration, are ignored. Specific control signaling in PDCCH detection occasions covered by the time domain length will not be detected by the terminal device. The ignored PDCCH detection occasions are common search space (Type3 CSS) and UE-specific search space (USS).

The PDCCH skipping duration indicated in the DCI is pre-configured by the higher layer. A PDCCH skipping duration corresponds to a respective value of the indication field in the DCI, and multiple different values can indicate different PDCCH skipping durations.

### PDCCH search space switching

Based on PDCCH triggering, it can also be triggered by a DCI field of up to two bits. The DCI used is mainly a normal scheduling DCI.

The UE is triggered by the DCI to switch to a specified search space group, that is, a search space set group (SSSG). 2 or 3 SSSGs can be configured. The PDCCH SSSG is pre-configured by the higher layer, and each search space can correspond to one or more SSSGs. A PDCCH SSSG corresponds to a respective value of the indication field in the DCI, and multiple different values may indicate different SSSGs.

When switching to an SSSG rather than SSSG0, the terminal device starts a timer. The terminal device restarts the timer when the terminal device receives a PDCCH on that SSSG. If the timer expires, the UE switches to a specific SSSG (i.e., SSSG0). In the embodiments of the present disclosure, the specific SSSG0 is search spaces that require dense PDCCH monitoring, here, a non-SSSG0 other than the SSSG0 (e.g., SSSG1) is an SSSG that requires sparse PDCCH monitoring. It will be appreciated that the dense PDCCH monitoring for the SSSG0 and the sparse PDCCH monitoring for the SSSG0 are relative.

The power saving technologies in the connected state are designed for the cases where the main radio of the terminal is always on, including DRX mechanism, WUS mechanism, SSSG switching and PDCCH skipping. Compared to the WUS mechanism, the ultra-low power WUS (i.e., LP-WUS) is more power-efficient, and uses a lower power receiver, i.e., it does not use the main radio. After receiving the LP-WUS, the terminal device turns on the main radio to monitor downlink signals, so as to achieve the purpose of power saving.

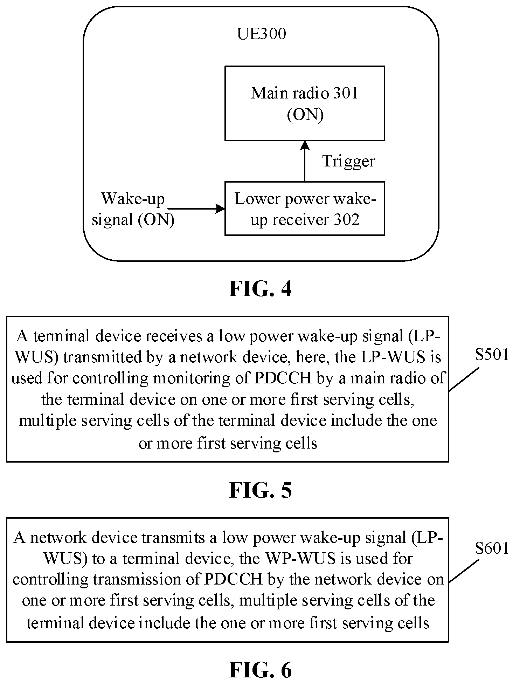

The operation principle of LP-WUS is illustrated in FIGS. 3 and 4. The UE 300 includes a main radio (MR) 301 and a lower power wake-up receiver (LR) 302. The UE 300 receives a wake-up signal (LP-WUS) indicating OFF or ON based on the LP wake-up receiver 302. As illustrated in FIG. 3, the LP wake-up receiver 302 receives a wake-up signal indicating OFF, and the main radio 301 remains in an OFF or deep sleep state. As illustrated in FIG. 4, the LP wake-up receiver 302 receives a wake-up signal indicating ON, and the LP wake-up receiver 302 triggers the main radio 301 to turn on.

After the introduction of LP-WUS, its impact on the UE in the connected state needs to be studied. Based on the current understanding, the impact of LP-WUS on the UE in the connected state includes: the LP-WUS is used to resume UE's MR monitoring of PDCCH. This may have certain effects on PDCCH skipping and search space set group switching. For example, when the lower power receiver of the UE receives the LP-WUS, the lower power receiver wakes up the main radio, and if the main radio is currently in a PDCCH skipping duration, the main radio needs to stop PDCCH skipping and resume PDCCH monitoring, or the main radio needs to perform search space set group switching, thereby enabling faster reception of scheduling signaling from the base station.

Then, in the carrier aggregation (CA) scenario, how to use LP-WUS to control the UE's behavior with respect to PDCCH skipping and search space set group switching on each serving cell.

In order to facilitate understanding of the technical solutions of the embodiments of the present disclosure, the technical solutions of the present disclosure are described in detail below through specific embodiments. The above related technologies as optional solutions can be arbitrarily combined with the technical solutions of the embodiments of the present disclosure, and the technical solutions obtained after the combinations belong to the protection scope of the embodiments of the present disclosure. The embodiments of the present disclosure include at least part of the following contents.

An embodiment of the present disclosure provides a wireless communication method applied to a terminal device, as illustrated in FIG. 5. The method includes an operation S501.

S501: the terminal device receives a low power wake-up signal (LP-WUS) transmitted by a network device, here, the LP-WUS is used for controlling monitoring of physical downlink control channel (PDCCH) by a main radio (MR) of the terminal device on one or more first serving cells, and multiple serving cells of the terminal device include the one or more first serving cells.

A lower power wake-up receiver (LR) in the terminal device in a connected state monitors the LP-WUS transmitted by the network device. In the case where the network device transmits the LP-WUS to the terminal device, the LR of the terminal device receives the LP-WUS transmitted by the network device, and the terminal device controls, based on the LP-WUS received by the LR, monitoring of PDCCH by the MR on the first serving cell(s) among the multiple serving cells of the terminal device. Here, the LP-WUS can control monitoring of PDCCH on the one or more first serving cells among the multiple serving cells of the terminal device.

It will be appreciated that "the LP-WUS is used for controlling the monitoring of PDCCH by the MR of the terminal device on the one or more first serving cells" may be replaced with "the LP-WUS is used for controlling the monitoring of PDCCH on the one or more first serving cells by the MR of the terminal device".

In the embodiments of the present disclosure, the multiple serving cells of the terminal device are all serving cells accessed by the terminal device via carrier aggregation. Here, the carrier aggregation is to aggregate multiple component carriers (CC), i.e., carrier units, together. Here, different component carriers correspond to different serving cells. The component carriers aggregated by the carrier aggregation may include one of: multiple contiguous carrier units within the same bandwidth; multiple non-contiguous carrier units within the same bandwidth; or multiple carrier units within different bandwidths.

The one or more first serving cells are part or all of the multiple serving cells of the terminal device.

In an example, the serving cells of the terminal device include cell 1, cell 2, and cell 3. In the case where the terminal device receives the LP-WUS, it controls monitoring of PDCCH by the MR of the terminal device on cell 1. Here, cell 1 belongs to the first serving cell.

In an example, the serving cells of the terminal device include cell 1, cell 2, and cell 3. In the case where the terminal device receives the LP-WUS, it controls monitoring of PDCCH by the MR of the terminal device on cell 1 and cell 2. Here, cell 1 and cell 2 belong to the first serving cells.

In an example, the serving cells of the terminal device include cell 1, cell 2, and cell 3. In the case where the terminal device receives the LP-WUS, it controls monitoring of PDCCH by the MR of the terminal device on cell 1, cell 2, and cell 3. Here, cell 1, cell 2, and cell 3 all belong to the first serving cells.

In the embodiments of the present disclosure, in the case where the terminal device receives the LP-WUS transmitted by the network device, the terminal device controls, based on the received LP-WUS, monitoring of PDCCH by the MR on one or more first serving cells among the multiple serving cells of the terminal device. After receiving the LP-WUS, the terminal device controls monitoring of the PDCCH for scheduling the service on the corresponding first serving cell, thereby reducing the service latency while reducing the power consumption of the terminal device as much as possible.

Hereinafter, the wireless communication method provided in FIG. 5 according to the embodiment of the present disclosure will be further described.

In some embodiments, the one or more first serving cells are all or part of one or more second serving cells; and the one or more second serving cells are the multiple serving cells of the terminal device or are associated with the LP-WUS.

In the embodiments of the present disclosure, in the case where the terminal device receives the LP-WUS, the terminal device determines the one or more second serving cells among the multiple serving cells of the terminal device, determines the one or more first serving cells based on the one or more second serving cells, and uses the one or more first serving cells as a control object to control the monitoring of the PDCCH by the MR of the terminal device on the one or more first serving cells.

It will be appreciated that the one or more second serving cells are a control range of the LP-WUS for controlling PDCCH monitoring, and the one or more first serving cells are serving cells that are ultimately controlled based on the control range.

Optionally, the one or more second serving cells are part or all of the multiple serving cells of the terminal device.

In the embodiments of the present disclosure, the one or more second serving cells are the multiple serving cells of the terminal device or are associated with the LP-WUS.

Taking the one or more second serving cells being serving cells associated with the received LP-WUS among the multiple serving cells of the terminal device as an example, the terminal device determines, based on the received LP-WUS, the one or more second serving cells from among the multiple serving cells of the terminal device.

In an example, if the serving cells of the terminal device include cell 1, cell 2, and cell 3, the second serving cell determined by the terminal device from cell 1, cell 2, and cell 3 based on the received LP-WUS is cell 1.

In an example, if the serving cells of the terminal device include cell 1, cell 2, and cell 3, the second serving cells determined by the terminal device from cell 1, cell 2, and cell 3 based on the received LP-WUS include cell 1, cell 2, and cell 3.

Taking the one or more second serving cells being the multiple serving cells of the terminal device as an example, the terminal device determines that the multiple serving cells of the terminal device are the multiple second serving cells.

In an example, if the serving cells of the terminal device include cell 1, cell 2, and cell 3, the second serving cells determined by the terminal device include cell 1, cell 2, and cell 3.

It can be understood that in the case where the one or more second serving cells are the multiple serving cells of the terminal device, the one or more first serving cells can be determined directly from among the multiple serving cells of the terminal device, and the concept of the second serving cell(s) can be omitted.

Optionally, the one or more first serving cells are part or all of the one or more second serving cells.

In the embodiments of the present disclosure, the expression "one or more" may be replaced with "at least one". For example, one or more first serving cells may be replaced with at least one first serving cell. For another example, one or more second serving cells may be replaced with at least one second serving cell.

In some embodiments, the one or more second serving cells include one of: case 1, a third serving cell, here, the third serving cell is a serving cell on which the LP-WUS is received; case 2, one or more serving cells or serving cell groups associated with the third serving cell; case 3, one or more serving cells or serving cell groups associated with the LP-WUS; case 4, one or more serving cells or serving cell groups indicated by the LP-WUS; or case 5, the multiple serving cells of the terminal device.

For case 1, when the terminal device receives the LP-WUS, the terminal device takes the third serving cell on which the LP-WUS is received as a control range, and determines whether to control monitoring of PDCCH by the MR on the third serving cell, that is, determines whether the third serving cell is the first serving cell.

For case 2, when the terminal device receives the LP-WUS, the terminal device determines serving cell(s) or serving cell group(s) associated with the third serving cell on which the LP-WUS is received, takes the serving cell(s) or the serving cell group(s) associated with the third serving cell as a control range, and for each serving cell in the serving cell(s) or serving cell group(s) associated with the third serving cell, determines whether to control monitoring of PDCCH by the MR on the serving cell, that is, determines the one or more first serving cells from the serving cell(s) or serving cell group(s) associated with the third serving cell.

Optionally, different serving cells among the multiple serving cells of the terminal device are each associated with one or more serving cells or serving cell groups. Here, serving cell group(s) associated with a serving cell may be a serving cell group having an association relationship with the serving cell or a serving cell group to which the serving cell belongs.

In an example, a serving cell 1 is associated with a serving cell group 1, and a serving cell 2 is associated with a serving cell group 2. If the terminal device receives LP-WUS1 on the serving cell 1, it determines whether to control monitoring of PDCCH by the MR on each serving cell in the serving cell group 1, that is, determines the one or more first serving cells from the serving cell group 1. If the terminal device receives LP-WUS2 on the serving cell 2, it determines whether to control monitoring of PDCCH by the MR on each serving cell in the serving cell group 2, that is, determines the one or more first serving cells from the serving cell group 2.

In the embodiments of the present disclosure, the serving cell(s) or serving cell group(s) associated with the serving cell may be replaced with serving cell(s) or serving cell group(s) associated with LP-WUS on the serving cell. Here, different LP-WUSs are configured on different serving cells, and the serving cell(s) or serving cell group(s) associated with the LP-WUS on the serving cell can be understood as the serving cell(s) or serving cell group(s) associated with the serving cell where the LP-WUS are located.

In an example, LP-WUS1 is configured on a serving cell 1, and LP-WUS2 is configured on a serving cell 2; and the LP-WUS1 is associated with a serving cell group 1, and the LP-WUS2 is associated with a serving cell group 2. If the terminal device receives the LP-WUS1 on the serving cell 1, it determines whether to control monitoring of PDCCH by the MR on each serving cell in the serving cell group 1, that is, determines the one or more first serving cells from the serving cell group 1. If the terminal device receives the LP-WUS2 on the serving cell 2, it determines whether to control monitoring of PDCCH by the MR on each serving cell in the serving cell group 2, that is, determines the one or more first serving cells from the serving cell group 2.

For case 3, when the terminal device receives the LP-WUS, the terminal device determines the serving cell(s) or serving cell group(s) associated with the received LP-WUS, takes the serving cell(s) or serving cell group(s) associated with the LP-WUS as a control range, and for each serving cell in the serving cell(s) or serving cell group(s) associated with the LP-WUS, determines whether to control monitoring of PDCCH by the MR on the serving cell, that is, determines the one or more first serving cells from the serving cell(s) or serving cell group(s) associated with the LP-WUS.

Optionally, different LP-WUSs among multiple LP-WUSs of the terminal device are each associated with one or more serving cells or serving cell groups.

In an example, LP-WUSs that the terminal device may receive include LP-WUS1 and LP-WUS2. The LP-WUS1 and the LP-WUS2 may be received on the same serving cell. Here, the LP-WUS1 is associated with a serving cell group 1, and the LP-WUS2 is associated with a serving cell group 2. If the terminal device receives the LP-WUS1, it determines whether to control monitoring of PDCCH by the MR on each serving cell in the serving cell group 1, that is, determines the one or more first serving cells from the serving cell group 1. If the terminal device receives the LP-WUS 2, it determines the one or more first serving cells from the serving cell group 2.

In the embodiments of the present disclosure, the serving cell(s) or serving cell group(s) associated with the LP-WUS may be replaced with serving cell(s) or serving cell group(s) associated with an LP-WUS monitoring resource for the LP-WUS. Here, different LP-WUSs correspond to different LP-WUS monitoring resources, and the serving cell(s) or serving cell group(s) associated with the LP-WUS monitoring resource can be understood as the serving cell(s) or serving cell group(s) associated with the LP-WUS.

Optionally, different LP-WUS monitoring resources are located on the same serving cell/bandwidth part or frequency band.

In an example, an LP-WUS monitoring resource 1 and an LP-WUS monitoring resource 2 are located on a serving cell 1, and the LP-WUS monitoring resource 1 is associated with a serving cell group 1 and the LP-WUS monitoring resource 2 is associated with a serving cell group 2. If the terminal device receives LP-WUS1 on the LP-WUS monitoring resource 1, the terminal device determines the one or more first serving cells from the serving cell group 1. If the terminal device receives LP-WUS2 on the LP-WUS monitoring resource 2, the terminal device determines the one or more first serving cells from the serving cell group 2.

For case 4, when the LP-WUS received by the terminal device indicates one or more serving cells or serving cell groups, the terminal device takes the serving cell(s) or serving cell group(s) indicated by the LP-WUS as a control range, and determines the one or more first serving cells from among the serving cell(s) or serving cell group(s) indicated by the LP-WUS.

In an example, if the LP-WUS received by the terminal device indicates a serving cell 1 and a serving cell 2, the terminal device determines the one or more first serving cells from the serving cell 1 and the serving cell 2.

In an example, if the LP-WUS received by the terminal device indicates a serving cell group 1, the terminal device determines the one or more first serving cells from among serving cells included in the serving cell group 1.

For case 5, when the terminal device receives the LP-WUS, the terminal device determines the one or more first serving cells from among all serving cells of the terminal device.

In some embodiments, the terminal device further performs the following operation.

The terminal device receives LP-WUS configuration information transmitted by the network device, here, the LP-WUS configuration information is used for configuring one or multiple LP-WUS monitoring resources.

In the embodiments of the present disclosure, the LP-WUS configuration information can be replaced with LP-WUS monitoring resource configuration, which is used for configuring time domain and/or frequency domain resource(s) for the terminal device to perform LP-WUS monitoring. The terminal device performs monitoring of LP-WUS based on the LP-WUS monitoring resource(s) configured by the LP-WUS configuration information transmitted by the network device.

The LP-WUS configuration information may configure one or multiple LP-WUS monitoring resources. If the LP-WUS configuration information configures the one LP-WUS monitoring resource, the terminal device can only receive one LP-WUS from the network device based on this LP-WUS monitoring resource. If the LP-WUS configuration information configures the multiple LP-WUS monitoring resources, the terminal device can receive multiple LP-WUSs from the network device.

For case 1, case 2, or case 3 described above, the terminal device performs reception of LP-WUS, and may receive multiple different LP-WUSs or receive multiple LP-WUSs on different serving cells. Therefore, the LP-WUS configuration information received by the terminal device configures the multiple LP-WUS monitoring resources.

For case 4 and case 5 described above, the terminal device performs reception of LP-WUS without needing to distinguish LP-WUSs or serving cells on which LP-WUSs are received. Therefore, the LP-WUS configuration information received by the terminal device may configure the one or multiple LP-WUS monitoring resources.

In some embodiments, the one or multiple LP-WUS monitoring resources are located on one or plural serving cells.

If the LP-WUS configuration information is used for configuring the one LP-WUS monitoring resource, the one LP-WUS monitoring resource is located on the one serving cell.

If the LP-WUS configuration information is used for configuring the multiple LP-WUS monitoring resources, the multiple LP-WUS monitoring resources are located on the one or plural serving cells.

If the multiple LP-WUS monitoring resources are located on the one serving cell, the terminal device receives multiple different LP-WUSs on the one serving cell.

If the multiple LP-WUS monitoring resources are located on the plural serving cells, the terminal device receives multiple different LP-WUSs on the plural serving cells.

In some embodiments, if the one or more second serving cells include the third serving cell, the one or multiple LP-WUS monitoring resources are located on the plural serving cells.

For case 1, the one or multiple LP-WUS monitoring resources configured for the terminal device are located on the plural serving cells, so that the terminal device may receive different LP-WUSs on different serving cells, and determine whether the third serving cell on which an LP-WUS is received is the first serving cell.

In some embodiments, if the one or more second serving cells include the one or more serving cells or serving cell groups associated with the third serving cell, the one or multiple LP-WUS monitoring resources are located on the one or plural serving cells.

For case 2, the one or multiple LP-WUS monitoring resources configured for the terminal device are located on the one or plural serving cells, so that the terminal device may receive LP-WUS(s) on the one or plural serving cells on which the LP-WUS monitoring resource(s) are located, thereby determining the one or more first serving cells from the one or more serving cells or serving cell groups associated with the third serving cell on which an LP-WUS is received.

In some embodiments, if the one or more second serving cells include the one or more serving cells or serving cell groups associated with the LP-WUS, the one or multiple LP-WUS monitoring resources are located on one serving cell or bandwidth part or frequency band.

For case 3, the one or multiple LP-WUS monitoring resources configured for the terminal device are located on one serving cell or bandwidth part or frequency band, so that the terminal device receives LP-WUS(s) on the one serving cell or bandwidth part or frequency band on which the LP-WUS monitoring resource(s) are located, and determines the one or more first serving cells from one or more serving cells or serving cell groups associated with an LP-WUS monitoring resource on which an LP-WUS is received.

In some embodiments, if the one or more second serving cells include the one or more serving cells or serving cell groups associated with the third serving cell, the terminal device further performs the following operation.

The terminal device receives first configuration information transmitted by the network device. Here, the first configuration information is used for configuring serving cell(s) or serving cell group(s) associated with each of one or more serving cells.

For case 2, the terminal device receives, from the network device, the first configuration information which is used for configuring the serving cell(s) or serving cell group(s) associated with the each of the one or more serving cells.

It can be understood that the first configuration information is used for configuring serving cell(s) or serving cell group(s) associated with an LP-WUS on the each of the one or more serving cells.

In some embodiments, if the one or more second serving cells include the one or more serving cells or serving cell groups associated with the LP-WUS, the terminal device further performs the following operation.

The terminal device receives second configuration information transmitted by the network device. Here, the second configuration information is used for configuring serving cell(s) or serving cell group(s) associated with each of multiple LP-WUSs.

For case 3, the second configuration information is used for configure the serving cell(s) or serving cell group(s) associated with the each of the multiple LP-WUSs.

When the multiple LP-WUS monitoring resources are located in one serving cell or bandwidth part or frequency band, the second configuration information is used for configuring serving cell(s) or serving cell group(s) associated with each of the multiple LP-WUS monitoring resources corresponding to the multiple LP-WUSs, so as to configure the serving cell(s) or serving cell group(s) associated with each of the multiple LP-WUSs.

In some embodiments, the LP-WUS is used for resuming monitoring of PDCCH by the MR of the terminal device on the one or more first serving cells.

In the embodiments of the present disclosure, a control manner in which the terminal device controls monitoring of PDCCH by the MR on the one or more first serving cells includes Control manner 1.

Control manner 1: resuming monitoring of PDCCH by the MR on the one or more first serving cells.

It will be appreciated that the LP-WUS indicating wake-up is used for resuming monitoring of PDCCH by the MR of the terminal device on the one or more first serving cells.

In the embodiments of the present disclosure, the LP-WUS may indicate wake-up or may not indicate wake-up. The LP-WUS indicating wake-up is used for waking up or resuming monitoring of PDCCH by the MR on the one or more first serving cells.

Optionally, if the terminal device receives the LP-WUS not indicating wake-up, it maintains a monitoring state of the PDCCH on the one or more first serving cells unchanged.

If the LR of the terminal device receives the LP-WUS indicating wake-up, the LR transmits a wake-up indication to the MR, and the MR resumes monitoring of PDCCH on the one or more first serving cells based on the wake-up indication.

After the MR resumes monitoring of PDCCH on the one or more first serving cells, the terminal device can perform monitoring of PDCCH on the one or more first serving cells via the MR.

The terminal device can perform monitoring of PDCCH via the MR, which can be understood as that the terminal device can perform monitoring of PDCCH based on a certain mechanism (e.g., DRX mechanism), but this does not mean that it performs monitoring of PDCCH continuously.

Optionally, the terminal device performs monitoring of PDCCH during an On Duration of DRX.

In some embodiments, the LP-WUS indicating wake-up is further used to control the MR to enter a wake-up state from a sleep state, here, the MR in the wake-up state resumes monitoring of PDCCH on the one or more first serving cells.

The state of the MR includes a wake-up state or a sleep state. The wake-up state can also be replaced with an active state, and the sleep state can also be replaced with an OFF state, a light sleep state, or a deep sleep state.

When the LR of the terminal device receives the LP-WUS indicating wake-up, the LR transmits a wake-up indication to the MR, and the MR enters the wake-up state from the sleep state based on the received wake-up indication, and in the wake-up state, resumes monitoring of the PDCCH on the one or more first serving cells.

In some embodiments, at a first time, the terminal device is in a PDCCH skipping duration on the first serving cell, here, the first time is a time when the terminal device receives the LP-WUS or a time corresponding to a time offset after the terminal device receives the LP-WUS, and here, the time offset is a duration required for a low power receiver of the terminal device to wake up the main radio.

In Control manner 1, the one or more first serving cells are part or all of the one or more second serving cells. Herein, the one or more second serving cells may be one or more second serving cells in any one of the case 1 to case 5 described above.

For each of the one or more second serving cells, the terminal device determines whether it is in a PDCCH skipping duration on the second serving cell at the first time. If a determination result is that the terminal device is in the PDCCH skipping duration on the second serving cell, the MR of the terminal device resumes monitoring of PDCCH on the second serving cell, and the second serving cell can be considered as the first serving cell.

In an example, the one or more second serving cells include cell 1, and if the terminal device is in the PDCCH skipping duration on cell 1 at the first time, it resumes monitoring of PDCCH by the MR on cell 1.

In an example, the one or more second serving cells include cell 1, cell 2, cell 3, and cell 4, and if the terminal device is in the PDCCH skipping duration on cell 1 and cell 3 at the first time, it resumes monitoring of PDCCH by the MR on cell 1 and cell 3.

In an example, the one or more second serving cells include cell 1, cell 2, cell 3, and cell 4, and if the terminal device is in the PDCCH skipping duration on cell 1, cell 2, cell 3, and cell 4 at the first time, it resumes monitoring of PDCCH by the MR on cell 1, cell 2, cell 3, and cell 4.

In the embodiments of the present disclosure, if, at the first time, the terminal device is not in the PDCCH skipping duration on the second serving cell, the terminal device resumes, based on the LP-WUS, monitoring of PDCCH by the MR on the second serving cell.

In the embodiments of the present disclosure, for the second serving cell adopting a PDCCH monitoring skipping mechanism, the priority of the LP-WUS is higher than that of the PDCCH monitoring skipping mechanism. When the terminal device receives the LP-WUS, if the terminal device is in the PDCCH skipping duration on the second serving cell, the second serving cell can be regarded as the first serving cell, and the terminal device resumes monitoring of PDCCH by the MR on the second serving cell.

In some embodiments, the LP-WUS is used for controlling the MR of the terminal device to perform search space set group switching on the one or more first serving cells.

In the embodiments of the present disclosure, a control manner in which the terminal device controls monitoring of PDCCH by the MR on the one or more first serving cells includes Control manner 2.

Control manner 2: controlling the MR to perform SSSG switching on the one or more first serving cells.

It will be appreciated that the LP-WUS indicating wake-up is used to control the MR to perform SSSG switching on the one or more first serving cells.

Here, for each of the one or more first serving cells, the MR of the terminal device performs SSSG switching on the serving cell, i.e., switching from a current SS or SSSG to a first SS or SSSG.

Different first serving cells among the multiple first serving cells correspond to different first SSs or SSSGs.

In some embodiments, the one or more first serving cells include all of the one or more second serving cells.

In Control manner 2, the terminal device performs SSSG switching on all the second serving cells included in the one or more second serving cells in any one of the case 1 to case 5 described above.

It can be understood that after the terminal device determines the one or more second serving cells among the multiple serving cells of the terminal device, the terminal device performs SSSG switching on the determined one or more second serving cells. In this case, the first serving cell and the second serving cell may be considered as the same concept.

In some embodiments, if the one or more second serving cells include one or more serving cell groups associated with the third serving cell, the one or more serving cell groups associated with the third serving cell are a serving cell group to which the third serving cell belongs.

If the one or more second serving cells are the one or more serving cell groups associated with the third serving cell as determined in the case 2, the one or more serving cell groups associated with the third serving cell may be considered as the serving cell group to which the third serving cell belongs. In this case, the terminal device performs SSSG switching on all serving cells in the serving cell group to which the third serving cell belongs.

In some embodiments, the terminal device further performs the following operation.

The terminal device monitors, based on the LP-WUS, a PDCCH on a first search space (SS) or search space set group (SSSG) on an active downlink bandwidth part (DL BWP) of the first serving cell.

For a first serving cell among the one or more first serving cells, after performing SSSG switching on the first serving cell, the terminal device monitors the PDCCH on a first SS or SSSG on an active DL BWP of the first serving cell.

In some embodiments, the first SS or SSSG is one of: an SS or SSSG predefined by a protocol; an SS or SSSG indicated by the network device; or an SS or SSSG determined based on a second SS or SSSG, here, the second SS or SSSG is an SS or SSSG for a last PDCCH monitoring before entering an LP-WUS monitoring state.

For the first serving cell, the second SS or SSSG is an SS or SSSG used by the terminal device for the last PDCCH monitoring on the first serving cell before entering the LP-WUS monitoring state.

In some embodiments, if the first SS or SSSG is determined based on the second SS or SSSG, the first SS or SSSG is the second SS or SSSG.

In the wireless communication method provided by the embodiments of the present disclosure, depending on different situations of the one or more second serving cells and different control manners for controlling monitoring of PDCCH by the MR on the on one or more first serving cells, the terminal device may implement scenarios including but not limited to the following.

Scenario 1: when the terminal device receives an LP-WUS, the terminal device determines a third serving cell on which the LP-WUS is received. If the terminal device is in a PDCCH skipping duration on the third serving cell at a first time, the terminal device resumes monitoring of PDCCH by the MR on the third serving cell.

Scenario 2: when the terminal device receives an LP-WUS, for each serving cell among one or more serving cells or serving cell sets associated with a third serving cell on which the LP-WUS is received, if the terminal device is in a PDCCH skipping duration on the serving cell at a first time, the terminal device resumes monitoring of PDCCH by the MR on the serving cell.

Scenario 3: when the terminal device receives an LP-WUS, for each serving cell among one or more serving cells or serving cell sets associated with the received LP-WUS, if the terminal device is in a PDCCH skipping duration on the serving cell at a first time, the terminal device resumes monitoring of PDCCH by the MR on the serving cell.

Scenario 4: when the terminal device receives an LP-WUS, for each serving cell among one or more serving cells or serving cell sets indicated by the received LP-WUS, if the terminal device is in a PDCCH skipping duration on the serving cell at a first time, the terminal device resumes monitoring of PDCCH by the MR on the serving cell.

Scenario 5: when the terminal device receives an LP-WUS, for each serving cell among all serving cells of the terminal device, if the terminal device is in a PDCCH skipping duration on the serving cell at a first time, the terminal device resumes monitoring of PDCCH by the MR on the serving cell.

Scenario 6: when the terminal device receives an LP-WUS, the terminal device's MR performs SSSG switching on a third serving cell on which the LP-WUS is received.

Scenario 7: when the terminal device receives an LP-WUS, the terminal device's MR performs SSSG switching on all serving cells in a serving cell set to which a third serving cell on which the LP-WUS is received belongs.

Scenario 8: when the terminal device receives an LP-WUS, the terminal device's MR performs SSSG switching on all serving cells among one or more serving cells or serving cell sets associated with the received LP-WUS.

Scenario 9: when the terminal device receives an LP-WUS, the terminal device's MR performs SSSG switching on all serving cells among one or more serving cells or serving cell sets indicated by the received LP-WUS.

Scenario 10: when the terminal device receives an LP-WUS, the terminal device's MR performs SSSG switching on all serving cells of the terminal device.

An embodiment of the present disclosure provides a wireless communication method applied to a network device, as illustrated in FIG. 6. The method includes an operation S601.

S501: the network device transmits a low power wake-up signal (LP-WUS) to a terminal device, here, the LP-WUS is used for controlling transmission of physical downlink control channel (PDCCH) by the network device on one or more first serving cells, and multiple serving cells of the terminal device include the one or more first serving cells.

The network device transmits the LP-WUS to the terminal device in a connected state, so as to control, based on the transmitted LP-WUS, monitoring of PDCCH by an MR of the terminal device on the one or more serving cells, and also control, based on the transmitted LP-WUS, transmission of PDCCH by the network device on the one or more first serving cells. Here, the LP-WUS can control transmission of PDCCH on the one or more first serving cells among the multiple serving cells of the terminal device.

It will be appreciated that "the LP-WUS is used for controlling the transmission of PDCCH by the network device on the one or more first serving cells" may be replaced with "the LP-WUS is used for controlling the transmission of PDCCH on the one or more first serving cells by the network device".

In an example, the serving cells of the terminal device include cell 1, cell 2, and cell 3. In the case where the network device transmits the LP-WUS to the terminal device, it controls transmission of PDCCH on cell 1. Here, cell 1 belongs to the first serving cell.

In an example, the serving cells of the terminal device include cell 1, cell 2, and cell 3. In the case where the network device transmits the LP-WUS to the terminal device, it controls transmission of PDCCH on cell 1 and cell 2. Here, cell 1 and cell 2 belong to the first serving cells.

In an example, the serving cells of the terminal device include cell 1, cell 2, and cell 3. In the case where the network device transmits the LP-WUS to the terminal device, it controls transmission of PDCCH on cell 1, cell 2, and cell 3. Here, cell 1, cell 2, and cell 3 all belong to the first serving cells.

In the embodiments of the present disclosure, in the case where the network device transmits the LP-WUS to the terminal device, the network device controls, based on the transmitted LP-WUS, transmission of PDCCH on one or more first serving cells among the multiple serving cells of the terminal device, so that the network device controls transmission of the PDCCH on the first serving cell(s) by transmitting the LP-WUS, thereby enabling the network device to transmit the LP-WUS based on service transmission requirements.

Hereinafter, the wireless communication method provided in FIG. 6 according to the embodiment of the present disclosure will be further described.

In some embodiments, the one or more first serving cells are all or part of one or more second serving cells; and the one or more second serving cells are the multiple serving cells of the terminal device or are associated with the LP-WUS.

In the embodiments of the present disclosure, in the case where the network device transmits the LP-WUS, the network device determines the one or more second serving cells among the multiple serving cells of the terminal device, determines the one or more first serving cells based on the one or more second serving cells, and uses the one or more first serving cells as a control object to control the transmission of the PDCCH on the one or more first serving cells.

It will be appreciated that the one or more second serving cells are a control range of the LP-WUS for controlling PDCCH transmission, and the one or more first serving cells are serving cells ultimately controlled based on the control range.

Optionally, the one or more second serving cells are part or all of the multiple serving cells of the terminal device.

In the embodiments of the present disclosure, the one or more second serving cells are the multiple serving cells of the terminal device or are associated with the LP-WUS.

Taking the one or more second serving cells being serving cells associated with the transmitted LP-WUS among the multiple serving cells of the terminal device as an example. In an example, if the serving cells of the terminal device include cell 1, cell 2, and cell 3, the second serving cell is cell 1 associated with the LP-WUS among cell 1, cell 2, and cell 3. In an example, if the serving cells of the terminal device include cell 1, cell 2, and cell 3, the second serving cells include cell 1, cell 2, and cell 3 associated with the LP-WUS among cell 1, cell 2, and cell 3.

Taking the one or more second serving cells being the multiple serving cells of the terminal device as an example. In an example, if the serving cells of the terminal device include cell 1, cell 2, and cell 3, the second serving cells include cell 1, cell 2, and cell 3.

It can be understood that in the case where the one or more second serving cells are the multiple serving cells of the terminal device, the one or more first serving cells can be determined directly from among the multiple serving cells of the terminal device, and the concept of the second serving cell(s) can be omitted.

Optionally, the one or more first serving cells are part or all of the one or more second serving cells.

In the embodiments of the present disclosure, the expression "one or more" may be replaced with "at least one". For example, one or more first serving cells may be replaced with at least one first serving cell. For another example, one or more second serving cells may be replaced with at least one second serving cell.

In some embodiments, the one or more second serving cells include one of: case 1, a third serving cell, here, the third serving cell is a serving cell on which the LP-WUS is received; case 2, one or more serving cells or serving cell groups associated with the third serving cell; case 3, one or more serving cells or serving cell groups associated with the LP-WUS; case 4, one or more serving cells or serving cell groups indicated by the LP-WUS; or case 5, the multiple serving cells of the terminal device.

For case 1, when the network device transmits the LP-WUS, the network device takes the third serving cell on which the LP-WUS is transmitted as a control range, and determines whether to control transmission of PDCCH on the third serving cell, that is, determines whether the third serving cell is the first serving cell.

For case 2, when the network device transmits the LP-WUS, the network device determines serving cell(s) or serving cell group(s) associated with the third serving cell on which the LP-WUS is transmitted, takes the serving cell(s) or the serving cell group(s) associated with the third serving cell as a control range, and for each serving cell in the serving cell(s) or serving cell group(s) associated with the third serving cell, determines whether to control transmission of PDCCH on the serving cell, that is, determines the one or more first serving cells from the serving cell(s) or serving cell group(s) associated with the third serving cell.

Optionally, different serving cells among the multiple serving cells of the terminal device are each associated with one or more serving cells or serving cell groups. Here, serving cell group(s) associated with a serving cell may be a serving cell group having an association relationship with the serving cell or a serving cell group to which the serving cell belongs.

In an example, a serving cell 1 is associated with a serving cell group 1, and a serving cell 2 is associated with a serving cell group 2. If the network device transmits LP-WUS1 on the serving cell 1, it determines whether to control transmission of PDCCH on each serving cell in the serving cell group 1, that is, determines the one or more first serving cells from the serving cell group 1. If the network device transmits LP-WUS2 on the serving cell 2, it determines whether to control transmission of PDCCH on each serving cell in the serving cell group 2, that is, determines the one or more first serving cells from the serving cell group 2.

In the embodiments of the present disclosure, the serving cell(s) or serving cell group(s) associated with the serving cell may be replaced with serving cell(s) or serving cell group(s) associated with LP-WUS on the serving cell. Here, different LP-WUSs are configured on different serving cells, and the serving cell(s) or serving cell group(s) associated with the LP-WUS on the serving cell can be understood as the serving cell(s) or serving cell group(s) associated with the serving cell where the LP-WUS are located.

In an example, LP-WUS1 is configured on a serving cell 1, and LP-WUS2 is configured on a serving cell 2; and the LP-WUS1 is associated with a serving cell group 1, and the LP-WUS2 is associated with a serving cell group 2. If the network device transmits the LP-WUS1 on the serving cell 1, the one or more first serving cells are serving cell(s) determined from the serving cell group 1. If the network device transmits the LP-WUS2 on the serving cell 2, the one or more first serving cells are serving cell(s) determined from the serving cell group 2.

For case 3, when the network device transmits the LP-WUS, the network device determines the serving cell(s) or serving cell group(s) associated with the transmitted LP-WUS, takes the serving cell(s) or serving cell group(s) associated with the LP-WUS as a control range, and for each serving cell in the serving cell(s) or serving cell group(s) associated with the LP-WUS, determines whether to control transmission of PDCCH on the serving cell, that is, the one or more first serving cells are serving cell(s) among the serving cell(s) or serving cell group(s) associated with the LP-WUS.

Optionally, different LP-WUSs among multiple LP-WUSs of the terminal device are each associated with one or more serving cells or serving cell groups.

In an example, LP-WUSs that the network device may transmit include LP-WUS1 and LP-WUS2. The LP-WUS1 and the LP-WUS2 may be transmitted on the same serving cell. Here, the LP-WUS1 is associated with a serving cell group 1, and the LP-WUS2 is associated with a serving cell group 2. If the network device transmits the LP-WUS1, it determines the one or more first serving cells from the serving cell group 1. If the network device transmits the LP-WUS 2, it determines the one or more first serving cells from the serving cell group 2.

In the embodiments of the present disclosure, the serving cell(s) or serving cell group(s) associated with the LP-WUS may be replaced with serving cell(s) or serving cell group(s) associated with an LP-WUS monitoring resource for the LP-WUS. Here, different LP-WUSs correspond to different LP-WUS monitoring resources, and the serving cell(s) or serving cell group(s) associated with the LP-WUS monitoring resource can be understood as the serving cell(s) or serving cell group(s) associated with the LP-WUS.

Optionally, different LP-WUS monitoring resources are located on the same serving cell/bandwidth part or frequency band.

In an example, an LP-WUS monitoring resource 1 and an LP-WUS monitoring resource 2 are located on a serving cell 1, and the LP-WUS monitoring resource 1 is associated with a serving cell group 1 and the LP-WUS monitoring resource 2 is associated with a serving cell group 2. If the network device transmits LP-WUS1 on the LP-WUS monitoring resource 1, the network device determines the one or more first serving cells from the serving cell group 1. If the network device transmits LP-WUS2 on the LP-WUS monitoring resource 2, the network device determines the one or more first serving cells from the serving cell group 2.

For case 4, when the LP-WUS transmitted by the network device indicates one or more serving cells or serving cell groups, the network device takes the serving cell(s) or serving cell group(s) indicated by the LP-WUS as a control range, and determines the one or more first serving cells from among the serving cell(s) or serving cell group(s) indicated by the LP-WUS.

In an example, if the LP-WUS transmitted by the network device indicates a serving cell 1 and a serving cell 2, the network device determines the one or more first serving cells from the serving cell 1 and the serving cell 2.

In an example, if the LP-WUS transmitted by the network device indicates a serving cell group 1, the network device determines the one or more first serving cells from among serving cells included in the serving cell group 1.

For case 5, when the network device transmits the LP-WUS, the network device determines the one or more first serving cells from among all serving cells of the terminal device.

In some embodiments, the network device further performs the following operation.

The network device transmits LP-WUS configuration information to the terminal device, here, the LP-WUS configuration information is used for configuring one or multiple LP-WUS monitoring resources.

In the embodiments of the present disclosure, the LP-WUS configuration information can be replaced with LP-WUS monitoring resource configuration, which is used for configuring time domain and/or frequency domain resource(s) for the terminal device to perform LP-WUS monitoring. The terminal device performs monitoring of LP-WUS based on the LP-WUS monitoring resource(s) configured by the LP-WUS configuration information transmitted by the network device. The network device performs transmission of LP-WUS based on the LP-WUS monitoring resource(s) configured by the LP-WUS configuration information.

The LP-WUS configuration information may configure one or multiple LP-WUS monitoring resources. If the LP-WUS configuration information configures the one LP-WUS monitoring resource, the network device can only transmit one LP-WUS based on this LP-WUS monitoring resource. If the LP-WUS configuration information configures the multiple LP-WUS monitoring resources, the network device can transmit multiple LP-WUSs to the terminal device.

For case 1, case 2, or case 3 described above, the network device performs transmission of LP-WUS, and may transmit multiple different LP-WUSs or transmit multiple LP-WUSs on different serving cells. Therefore, the LP-WUS configuration information transmitted by the network device configures the multiple LP-WUS monitoring resources.

For case 4 and case 5 described above, the network device performs transmission of LP-WUS without needing to distinguish LP-WUSs or serving cells on which LP-WUSs are received. Therefore, the LP-WUS configuration information transmitted by the network device may configure the one or multiple LP-WUS monitoring resources.

In some embodiments, the one or multiple LP-WUS monitoring resources are located on one or plural serving cells.

If the LP-WUS configuration information is used for configuring the one LP-WUS monitoring resource, the one LP-WUS monitoring resource is located on the one serving cell.

If the LP-WUS configuration information is used for configuring the multiple LP-WUS monitoring resources, the multiple LP-WUS monitoring resources are located on the one or plural serving cells.

If the multiple LP-WUS monitoring resources are located on the one serving cell, the network device transmits multiple different LP-WUSs on the one serving cell.

If the multiple LP-WUS monitoring resources are located on the plural serving cells, the network device transmits multiple different LP-WUSs on the plural serving cells.

In some embodiments, if the one or more second serving cells include the third serving cell, the one or multiple LP-WUS monitoring resources are located on the plural serving cells.

For case 1, the one or multiple LP-WUS monitoring resources configured by the network device for the terminal device are located on the plural serving cells, so that the network device may transmit different LP-WUSs on different serving cells, and determine whether the third serving cell on which an LP-WUS is transmitted is the first serving cell.

In some embodiments, if the one or more second serving cells include the one or more serving cells or serving cell groups associated with the third serving cell, the one or multiple LP-WUS monitoring resources are located on the one or plural serving cells.

For case 2, the one or multiple LP-WUS monitoring resources configured by the network device for the terminal device are located on the one or plural serving cells, so that the network device may transmit LP-WUS(s) on the one or plural serving cells on which the LP-WUS monitoring resource(s) are located, thereby determining the one or more first serving cells from the one or more serving cells or serving cell groups associated with the third serving cell on which an LP-WUS is transmitted.

In some embodiments, if the one or more second serving cells include the one or more serving cells or serving cell groups associated with the LP-WUS, the one or multiple LP-WUS monitoring resources are located on one serving cell or bandwidth part or frequency band.

For case 3, the one or multiple LP-WUS monitoring resources configured by the network device for the terminal device are located on one serving cell or bandwidth part or frequency band, so that the network device transmits LP-WUS(s) on the one serving cell or bandwidth part or frequency band on which the LP-WUS monitoring resource(s) are located, and determines the one or more first serving cells from one or more serving cells or serving cell groups associated with an LP-WUS monitoring resource on which an LP-WUS is transmitted.

In some embodiments, if the one or more second serving cells include the one or more serving cells or serving cell groups associated with the third serving cell, the network device further performs the following operation.

The network device transmits first configuration information to the terminal device. Here, the first configuration information is used for configuring serving cell(s) or serving cell group(s) associated with each of one or more serving cells.

For case 2, the network device transmits, to the terminal device, the first configuration information which is used for configuring the serving cell(s) or serving cell group(s) associated with the each of the one or more serving cells.

It can be understood that the first configuration information is used for configuring serving cell(s) or serving cell group(s) associated with an LP-WUS on the each of the one or more serving cells.

In some embodiments, if the one or more second serving cells include the one or more serving cells or serving cell groups associated with the LP-WUS, the network device further performs the following operation.

The network device transmits second configuration information to the terminal device. Here, the second configuration information is used for configuring serving cell(s) or serving cell group(s) associated with each of one or more LP-WUSs.

For case 3, the second configuration information is used for configure serving cell(s) or serving cell group(s) associated with each of multiple LP-WUSs.

When the multiple LP-WUS monitoring resources are located in one serving cell or bandwidth part or frequency band, the second configuration information is used for configuring serving cell(s) or serving cell group(s) associated with each of the multiple LP-WUS monitoring resources corresponding to the multiple LP-WUSs, so as to configure the serving cell(s) or serving cell group(s) associated with each of the multiple LP-WUSs.

In some embodiments, the LP-WUS is used for resuming transmission of PDCCH by the network device on the one or more first serving cells.

In the embodiments of the present disclosure, a control manner in which the network device controls transmission of PDCCH on the one or more first serving cells includes Control manner 3.

Control manner 3: resuming transmission of PDCCH on the one or more first serving cells.

It will be appreciated that the LP-WUS indicating wake-up is used for resuming transmission of PDCCH by the network device on the one or more first serving cells.

In the embodiments of the present disclosure, the LP-WUS may indicate wake-up or may not indicate wake-up. The LP-WUS indicating wake-up is used for waking up or resuming transmission of PDCCH by the terminal device on the one or more first serving cells.

Optionally, if the network device transmits the LP-WUS not indicating wake-up, which is used for the network device to maintain a transmission state of the PDCCH on the one or more first serving cells unchanged.

After the network device resumes transmission of PDCCH on the one or more first serving cells, the network device can perform transmission of PDCCH on the one or more first serving cells.

The network device can perform transmission of PDCCH, which can be understood as that the network device can perform transmission of PDCCH based on a certain mechanism (e.g., DRX mechanism), but this does not mean that it performs transmission of PDCCH continuously.

Optionally, the network device performs transmission of PDCCH during an On Duration of DRX.

In some embodiments, at a first time, the terminal device is in a PDCCH skipping duration on the first serving cell, here, the first time is a time when the terminal device receives the LP-WUS or a time corresponding to a time offset after the terminal device receives the LP-WUS, and here, the time offset is a duration required for a low power receiver of the terminal device to wake up a main radio.

In Control manner 3, the one or more first serving cells are part or all of the one or more second serving cells. Herein, the one or more second serving cells may be one or more second serving cells in any one of the case 1 to case 5 described above.

For each of the one or more second serving cells, the network device determines whether the terminal device is in a PDCCH skipping duration on the second serving cell at the first time. If a determination result is that the terminal device is in the PDCCH skipping duration on the second serving cell, the network device resumes transmission of PDCCH on the second serving cell, and the second serving cell can be considered as the first serving cell.

In an example, the one or more second serving cells include cell 1, and if, at the first time, the terminal device is in the PDCCH skipping duration on cell 1, then transmission of PDCCH on cell 1 is resumed.

In an example, the one or more second serving cells include cell 1, cell 2, cell 3, and cell 4, and if, at the first time, the terminal device is in the PDCCH skipping duration on cell 1 and cell 3, then transmission of PDCCH on cell 1 and cell 3 is resumed.

In an example, the one or more second serving cells include cell 1, cell 2, cell 3, and cell 4, and if, at the first time, the terminal device is in the PDCCH skipping duration on cell 1, cell 2, cell 3, and cell 4, then transmission of PDCCH on cell 1, cell 2, cell 3, and cell 4 is resumed.

In the embodiments of the present disclosure, if, at the first time, the terminal device is not in the PDCCH skipping duration on the second serving cell, the network device resumes, based on the LP-WUS, transmission of PDCCH on the second serving cell.

In the embodiments of the present disclosure, for the second serving cell adopting a PDCCH monitoring skipping mechanism, the priority of the LP-WUS is higher than that of the PDCCH monitoring skipping mechanism. When the network device transmits the LP-WUS, if the terminal device is in the PDCCH skipping duration on the second serving cell, the second serving cell can be regarded as the first serving cell, and the network device resumes transmission of PDCCH on the second serving cell.

In some embodiments, the LP-WUS is used for controlling the network device to perform search space set group switching on the one or more first serving cells.

In the embodiments of the present disclosure, a control manner in which the network device controls transmission of PDCCH on the one or more first serving cells includes Control manner 4.

Control manner 4: controlling SSSG switching on the one or more first serving cells.

It will be appreciated that the LP-WUS indicating wake-up is used for controlling SSSG switching on the one or more first serving cells.

Here, for each of the one or more first serving cells, the network device performs SSSG switching on the serving cell, i.e., switching from a current SS or SSSG to a first SS or SSSG.

Different first serving cells among the multiple first serving cells correspond to different first SSs or SSSGs.

In some embodiments, the one or more first serving cells include all of the one or more second serving cells.

The network device performs SSSG switching on all the second serving cells included in the one or more second serving cells in any one of the case 1 to case 5 described above.

It can be understood that after the network device determines the one or more second serving cells among the multiple serving cells of the terminal device, the network device performs SSSG switching on the determined one or more second serving cells. In this case, the first serving cell and the second serving cell may be considered as the same concept.

In some embodiments, if the one or more second serving cells include one or more serving cell groups associated with the third serving cell, the one or more serving cell groups associated with the third serving cell are a serving cell group to which the third serving cell belongs.

If the one or more second serving cells are the one or more serving cell groups associated with the third serving cell as determined in the case 2, the one or more serving cell groups associated with the third serving cell may be considered as the serving cell group to which the third serving cell belongs. In this case, the terminal device performs SSSG switching on all serving cells in the serving cell group to which the third serving cell belongs.

In some embodiments, the network device further performs the following operation.

The network device transmits, based on the LP-WUS, a PDCCH on a first search space (SS) or search space set group (SSSG) on an active downlink bandwidth part (DL BWP) of the first serving cell.

For a first serving cell among the one or more first serving cells, after performing SSSG switching on the first serving cell, the network device transmits the PDCCH on a first SS or SSSG on an active DL BWP of the first serving cell.

In some embodiments, the first SS or SSSG is one of: an SS or SSSG predefined by a protocol; an SS or SSSG indicated by the network device; or an SS or SSSG determined based on a second SS or SSSG, here, the second SS or SSSG is an SS or SSSG for a last PDCCH monitoring before entering an LP-WUS monitoring state.

For a first serving cell, the second SS or SSSG is an SS or SSSG used by the terminal device for the last PDCCH monitoring on the first serving cell before entering the LP-WUS monitoring state.

In some embodiments, if the first SS or SSSG is determined based on the second SS or SSSG, the first SS or SSSG is the second SS or SSSG.

In the wireless communication method provided by the embodiments of the present disclosure, depending on different situations of the one or more second serving cells and different control manners for controlling transmission of PDCCH on the on one or more first serving cells, the network device may implement scenarios including but not limited to the following.

Scenario 11: when the network device transmits an LP-WUS, the network device determines a third serving cell on which the LP-WUS is transmitted. If the terminal device is in a PDCCH skipping duration on the third serving cell at a first time, the network device resumes transmission of PDCCH on the third serving cell.

Scenario 12: when the network device transmits an LP-WUS, for each serving cell among one or more serving cells or serving cell sets associated with a third serving cell on which the LP-WUS is received, if the terminal device is in a PDCCH skipping duration on the serving cell at a first time, the network device resumes transmission of PDCCH on the serving cell.

Scenario 13: when the network device transmits an LP-WUS, for each serving cell among one or more serving cells or serving cell sets associated with the received LP-WUS, if the terminal device is in a PDCCH skipping duration on the serving cell at a first time, the network device resumes transmission of PDCCH on the serving cell.

Scenario 14: when the network device transmits an LP-WUS, for each serving cell among one or more serving cells or serving cell sets indicated by the received LP-WUS, if the terminal device is in a PDCCH skipping duration on the serving cell at a first time, the network device resumes transmission of PDCCH on the serving cell.

Scenario 15: when the network device transmits an LP-WUS, for each serving cell among all serving cells of the terminal device, if the terminal device is in a PDCCH skipping duration on the serving cell at a first time, the network device resumes transmission of PDCCH on the serving cell.

Scenario 16: when the network device transmits an LP-WUS, the network device performs SSSG switching on a third serving cell on which the LP-WUS is transmitted.

Scenario 17: when the network device transmits an LP-WUS, the network device performs SSSG switching on all serving cells in a serving cell set to which a third serving cell on which the LP-WUS is transmitted belongs.

Scenario 18: when the network device transmits an LP-WUS, the network device performs SSSG switching on all serving cells among one or more serving cells or serving cell sets associated with the LP-WUS.

Scenario 19: when the network device transmits an LP-WUS, the network device performs SSSG switching on all serving cells among one or more serving cells or serving cell sets indicated by the transmitted LP-WUS.

Scenario 20: when the network device transmits an LP-WUS, the network device performs SSSG switching on all serving cells of the terminal device.

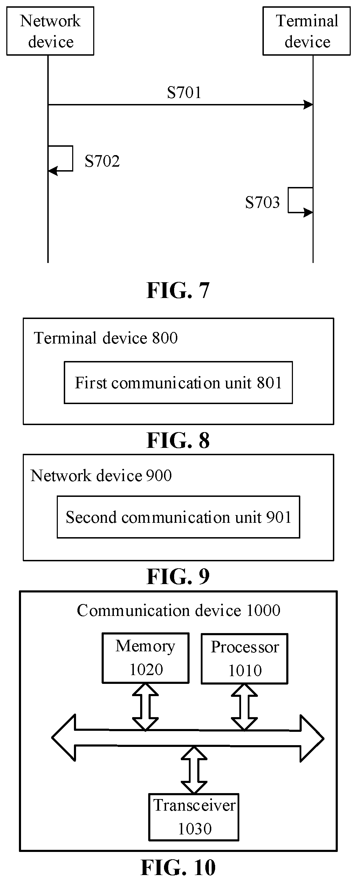

An embodiment of the present disclosure provides a wireless communication method, applied to a wireless communication system including a terminal device and a network device, as illustrated in FIG. 7. The method includes operations S701 to S703.

S701: the network device transmits an LP-WUS to the terminal device.

S702: the network device controls, based on the LP-WUS, transmission of PDCCH on one or more first serving cells.

S703: the terminal device controls, based on the LP-WUS, monitoring of PDCCH by an MR on the one or more first serving cells.

It should be noted that in FIG. 7, S702 is executed before S703. However, in practical applications, no limitation is imposed on the order in which S702 and S703 are executed.

In the wireless communication method illustrated in FIG. 7, for the implementation on the terminal device side, the reference may be made to the description of the wireless communication method on the terminal device side illustrated in FIG. 5; and for the implementation on the network device side, the reference may be made to the description of the wireless communication method on the network device side illustrated in FIG. 6. Details are not repeated here.

It can be understood that the network device transmits the LP-WUS to the terminal device, here, for the network device side, the LP-WUS is used for controlling transmission of PDCCH on the one or more first serving cells; and for the terminal device side, the LP-WUS is used for controlling monitoring of PDCCH by the MR on the one or more first serving cells.

Hereinafter, the wireless communication method provided by the embodiments of the present disclosure will be described through multiple embodiments.

### Embodiment 1: Using LP-WUS to Control Terminal to Resume PDCCH Monitoring During PDCCH Skipping-Solution 1

In a CA scenario, a UE monitors LP-WUS on multiple serving cells. The LP-WUS received by the UE on a certain serving cell is used for controlling the UE to resume PDCCH monitoring on the serving cell.

The specific implementation process is as follows.
1. The UE in a connected state receives LP-WUS configuration information from a base station. In the CA scenario, the base station can configure, for the UE, LP-WUS monitoring resources on multiple serving cells and the like.
2. The UE monitors LP-WUS on each serving cell configured with the LP-WUS based on the configuration from the base station. If the UE receives an LP-WUS on a first serving cell and the UE is currently in a PDCCH skipping duration on the first serving cell, an MR of the UE resumes PDCCH monitoring on the first serving cell.

### Embodiment 2: Using LP-WUS to Control Terminal to Resume PDCCH monitoring during PDCCH skipping-Solution 2

In a CA scenario, a UE monitors LP-WUS on one or more serving cells. The LP-WUS received by the UE on a certain serving cell is used for controlling the UE to resume PDCCH monitoring on one or more serving cells associated with the LP-WUS.

The specific implementation process is as follows.
1. The UE in a connected state receives LP-WUS configuration information from a base station. In the CA scenario, the base station may configure, for the UE, LP-WUS monitoring resource(s) on one or more serving cells and the like. Moreover, for LP-WUS on each of the one or more serving cells configured with the LP-WUS, the base station configures a serving cell list or serving cell group associated with the LP-WUS. Each LP-WUS is used for controlling the UE to resume PDCCH monitoring on all serving cells in the serving cell list or serving cell group associated with the LP-WUS.
2. The UE monitors LP-WUS on each serving cell configured with the LP-WUS based on the configuration from the base station. If the UE receives an LP-WUS on a first serving cell, assuming that the LP-WUS on the first serving cell is associated with a second serving cell list, then for each serving cell in the second serving cell list, if the UE is currently in a PDCCH skipping duration on the serving cell, an MR of the UE resumes PDCCH monitoring on the serving cell.

### Embodiment 3: Using LP-WUS to Control Terminal to Resume PDCCH Monitoring During PDCCH Skipping-Solution 3

In a CA scenario, a UE monitors LP-WUS on multiple LP-WUS resources. The LP-WUS received by the UE on a certain LP-WUS resource is used for controlling the UE to resume PDCCH monitoring on one or more serving cells associated with the LP-WUS resource.

The specific implementation process is as follows.
1. The UE in a connected state receives LP-WUS configuration information from a base station. In the CA scenario, the base station may configure multiple LP-WUS monitoring resources for the UE. Different from Embodiment 2, the multiple LP-WUS monitoring resources are located on the same serving cell, or the same BWP, or the same frequency band. Moreover, for each of the multiple LP-WUS monitoring resources, the base station configures a serving cell list or a serving cell group associated with the LP-WUS monitoring resource. LP-WUS on each LP-WUS monitoring resource is used for controlling the UE to resume PDCCH monitoring on all serving cells in the serving cell list or serving cell group associated with the LP-WUS monitoring resource.
2. The UE monitors the LP-WUS on each LP-WUS monitoring resource based on the configuration from the base station. If the UE receives an LP-WUS on an LP-WUS monitoring resource, assuming that the LP-WUS monitoring resource is associated with a second serving cell list, then for each serving cell in the second serving cell list, if the UE is currently in a PDCCH skipping duration on the serving cell, an MR of the UE resumes PDCCH monitoring on the serving cell.

### Embodiment 4: Using LP-WUS to Control Terminal to Resume PDCCH Monitoring During PDCCH Skipping-Solution 4

In a CA scenario, a base station uses an LP-WUS to explicitly instruct a UE to resume PDCCH monitoring on one or more serving cells or serving cell groups. After receiving the LP-WUS, the UE resumes PDCCH monitoring on the corresponding serving cell(s) based on the instruction of the LP-WUS.

The specific implementation process is as follows.
1. The UE in a connected state receives, from the base station, LP-WUS configuration information including LP-WUS monitoring resources.
2. The UE monitors LP-WUS on the LP-WUS monitoring resources based on the configuration from the base station. If the UE receives an LP-WUS, where the LP-WUS explicitly instructs the UE to resume PDCCH monitoring on serving cell(s) that are in a PDCCH skipping duration among one or more serving cells or serving cell groups, then an MR of the UE resumes PDCCH monitoring on the corresponding serving cell(s) that are in the PDCCH skipping duration based on the instruction of the LP-WUS.

### Embodiment 5: Using LP-WUS to Control Terminal to Resume PDCCH Monitoring During PDCCH Skipping-Solution 5

In a CA scenario, if a UE receives an LP-WUS, the UE resumes PDCCH monitoring on all serving cells that are currently in a PDCCH skipping duration.

The specific implementation process is as follows.
1. The UE in a connected state receives, from the base station, LP-WUS configuration information including LP-WUS monitoring resources.
2. The UE monitors LP-WUS on the LP-WUS monitoring resources based on the configuration from the base station. If the UE receives an LP-WUS, an MR of the UE resumes PDCCH monitoring on all serving cells that are currently in the PDCCH skipping duration.

### Embodiment 6: Using LP-WUS to Control PDCCH Search Space Set Group Switching-Solution 1

In a CA scenario, a UE monitors LP-WUS on one or more serving cells. The LP-WUS received by the UE on a certain serving cell is used for controlling the UE to perform search space set group switching on the serving cell or on all serving cells in a serving cell group to which the serving cell belongs.

The specific implementation process is as follows.
1. The UE in a connected state receives LP-WUS configuration information from a base station. In the CA scenario, the base station may configure, for the UE, LP-WUS monitoring resource(s) on one or more serving cells and the like.
2. The UE monitors LP-WUS on each serving cell configured with the LP-WUS based on the configuration from the base station. If the UE receives an LP-WUS on a first serving cell, then the following methods can be performed.

Method 1: an MR of the UE performs search space set group switching on the first serving cell.

Method 2: if the base station configures cellGroupsForSwitchList for the UE (i.e., grouping multiple serving cells of the UE, where each serving cell belongs to a cell group, and in this case, the UE performs search space set group switching in units of cell groups), then the MR of the UE performs search space set group switching on all serving cells in a first serving cell group to which the first serving cell belongs.

Here, for each serving cell on which the search space set group switching is performed, the UE monitors PDCCH on a first search space or search space set group on an active DL BWP on the serving cell (i.e., the first search space or search space set group is a target search space or search space set group after switching). The first search space or search space set group is predefined by a protocol, or is configured by the network via a system broadcast message or UE-specific signaling (e.g., UE-specific RRC message, MAC CE, PDCCH), or determined based on a second search space or search space set group (here, the second search space or search space set group is a search space or search space set group used by the UE for the latest or last PDCCH monitoring before entering an LP-WUS monitoring state, the UE sets the first search space or search space set group set to be the second search space or search space set group).

### Embodiment 7: Using LP-WUS to Control PDCCH Search Space Set Group Switching-Solution 2

In a CA scenario, a UE monitors LP-WUS on multiple LP-WUS resources. The LP-WUS received by the UE on a certain LP-WUS resource is used for controlling the UE to perform search space set group switching on all serving cells in one or more serving cells or one or more serving cell groups associated with the LP-WUS monitoring resource.

The specific implementation process is as follows.
1. The UE in a connected state receives LP-WUS configuration information from a base station. In the CA scenario, the base station may configure one or multiple LP-WUS monitoring resources for the UE. Different from Embodiment 6, the one or multiple LP-WUS monitoring resources are located on the same serving cell, or the same BWP, or the same frequency band. Moreover, for each of the multiple LP-WUS monitoring resources, the base station configures one or more serving cells or one or more serving cell groups associated with the LP-WUS monitoring resource (here, the serving cell groups are determined based on the parameter cellGroupsForSwitchList). LP-WUS on each LP-WUS monitoring resource is used for controlling the UE to perform search space set group switching on all serving cells in the one or more serving cells or one or more serving cell groups associated with the LP-WUS monitoring resource.
2. The UE monitors LP-WUS on respective LP-WUS monitoring resources based on the configuration from the base station. If the UE receives an LP-WUS on an LP-WUS monitoring resource, assuming that the LP-WUS monitoring resource is associated with one or more second serving cells (groups), then for each serving cell in the one or more second serving cells (groups), an MR of the UE performs search space set group switching on the serving cell.

Here, for each serving cell on which the search space set group switching is performed, the UE monitors PDCCH on a first search space or search space set group on an active DL BWP on the serving cell (i.e., the first search space or search space set group is a target search space or search space set group after switching). The first search space or search space set group is predefined by a protocol, or is configured by the network via a system broadcast message or UE-specific signaling (e.g., UE-specific RRC message, MAC CE, PDCCH), or determined based on a second search space or search space set group (here, the second search space or search space set group is a search space or search space set group used by the UE for the latest or last PDCCH monitoring before entering an LP-WUS monitoring state, the UE sets the first search space or search space set group set to be the second search space or search space set group).

### Embodiment 8: Using LP-WUS to Control PDCCH Search Space Set Group Switching-Solution 3

In a CA scenario, a base station uses an LP-WUS to explicitly instruct a UE to perform search space set group switching on one or more serving cells or serving cell groups. After receiving the LP-WUS, the UE performs search space set group switching on the corresponding serving cell(s) based on the instruction of the LP-WUS.

The specific implementation process is as follows.
1. The UE in a connected state receives, from the base station, LP-WUS configuration information including LP-WUS monitoring resources.
2. The UE monitors LP-WUS on the LP-WUS monitoring resources based on the configuration from the base station. If the UE receives an LP-WUS, where the LP-WUS explicitly instructs the UE to perform search space set group switching on all serving cells in one or more serving cells or serving cell groups (here, the serving cell groups are determined based on the parameter cellGroupsForSwitchList), then an MR of the UE performs search space set group switching on the corresponding serving cell(s) based on the instruction of the LP-WUS.

Here, for each serving cell on which the search space set group switching is performed, the UE monitors PDCCH on a first search space or search space set group on an active DL BWP on the serving cell (i.e., the first search space or search space set group is a target search space or search space set group after switching). The first search space or search space set group is predefined by a protocol, or is configured by the network via a system broadcast message or UE-specific signaling (e.g., UE-specific RRC message, MAC CE, PDCCH), or determined based on a second search space or search space set group (here, the second search space or search space set group is a search space or search space set group used by the UE for the latest or last PDCCH monitoring before entering an LP-WUS monitoring state, the UE sets the first search space or search space set group set to be the second search space or search space set group).

### Embodiment 9: Using LP-WUS to Control PDCCH Search Space Set Group Switching-Solution 4

In a CA scenario, if a UE receives an LP-WUS, the UE performs search space set group switching on all serving cells.

The specific implementation process is as follows.
1. The UE in a connected state receives, from a base station, LP-WUS configuration information including LP-WUS monitoring resources.
2. The UE monitors LP-WUS on the LP-WUS monitoring resources based on the configuration from the base station. If the UE receives an LP-WUS, an MR of the UE performs search space set group switching on all serving cells.

Here, for each serving cell on which the search space set group switching is performed, the UE monitors PDCCH on a first search space or search space set group on an active DL BWP on the serving cell (i.e., the first search space or search space set group is a target search space or search space set group after switching). The first search space or search space set group is predefined by a protocol, or is configured by the network via a system broadcast message or UE-specific signaling (e.g., UE-specific RRC message, MAC CE, PDCCH), or determined based on a second search space or search space set group (here, the second search space or search space set group is a search space or search space set group used by the UE for the latest or last PDCCH monitoring before entering an LP-WUS monitoring state, the UE sets the first search space or search space set group set to be the second search space or search space set group).

The embodiments of the present disclosure disclose a method for controlling the terminal to adjust PDCCH monitoring based on a low power wake-up signal in the CA scenario. Using the method, the network device transmits the LP-WUS, so as to control the MR of the UE to resume PDCCH monitoring on part or all of the serving cells that are in the PDCCH skipping duration, and/or to perform search space set group switching on part or all of the serving cells, so that the UE can receive scheduling from the base station as soon as possible, thereby reducing the service latency while taking into account the power saving of the terminal, and improving the user experience.

The preferred embodiments of the present disclosure have been described in detail above with reference to the accompanying drawings, but the present disclosure is not limited to the specific details in the above embodiments, and a variety of simple modifications can be made to the technical schemes of the present disclosure within the scope of the technical concept of the present disclosure, and these simple modifications all belong to the protection scope of the present disclosure. For example, each specific technical feature described in the above detailed embodiments can be combined in any suitable manner without contradiction, and various possible combinations will not be further described in the present disclosure in order to avoid unnecessary repetition. For another example, various different embodiments of the present disclosure may be arbitrarily combined, and as long as the combinations do not depart from the idea of the present disclosure, they should also be regarded as the content disclosed in the present disclosure. For another example, on the premise that there is no conflict, each embodiment and/or the technical features in each embodiment described in the present disclosure can be arbitrarily combined with the related art, and the technical solutions obtained after the combination should also fall within the protection scope of the present disclosure.

It should also be understood that in the various method embodiments of the present disclosure, the size of the sequence numbers of the above-described processes does not mean a particular order of execution, and the execution order of each process should be determined by its function and internal logic, and should not constitute any limitation on the implementation processes of the embodiments of the present disclosure. Further, in the embodiments of the present disclosure, the terms "downlink", "uplink", and "sidelink" are used to indicate a transmission direction of a signal or data, here, "downlink" is used to indicate that the transmission direction of the signal or data is a first direction from the base station to the user equipment in the cell, "uplink" is used to indicate that the transmission direction of the signal or data is a second direction from the user equipment in the cell to the base station, and "sidelink" is used to indicate that the transmission direction of the signal or data is a third direction from the first user equipment to the second user equipment. For example, "downlink signal" means that the transmission direction of the signal is the first direction. In addition, in the embodiments of the present disclosure, the term "and/or" merely describes an association relationship between associated objects, indicating that there may be three kinds of relationships. Specifically, A and/or B may represent three cases in which A exists alone, A and B exist at the same time, and B exists alone. In addition, the character "/" herein generally indicates that the associated objects before and after this character are in an "or" relationship.

FIG. 8 is a first diagram of structure composition of a terminal device provided by an embodiment of the present disclosure. As illustrated in FIG. 8, the terminal device 800 includes a first communication unit 1001, configured to receive a low power wake-up signal (LP-WUS) transmitted by a network device. Here, the LP-WUS is used for controlling monitoring of physical downlink control channel (PDCCH) by a main radio (MR) of the terminal device on one or more first serving cells, and multiple serving cells of the terminal device include the one or more first serving cells.

In some embodiments, the one or more first serving cells are all or part of one or more second serving cells; and the one or more second serving cells are the multiple serving cells of the terminal device or are associated with the LP-WUS.

In some embodiments, the one or more second serving cells include one of: a third serving cell, wherein the third serving cell is a serving cell on which the LP-WUS is received; one or more serving cells or serving cell groups associated with the third serving cell; one or more serving cells or serving cell groups associated with the LP-WUS; one or more serving cells or serving cell groups indicated by the LP-WUS; or the multiple serving cells of the terminal device.

In some embodiments, the first communication unit 801 is further configured to receive LP-WUS configuration information transmitted by the network device, here, the LP-WUS configuration information is used for configuring one or more LP-WUS monitoring resources.

In some embodiments, the one or more LP-WUS monitoring resources are located on one or plural serving cells.

In some embodiments, if the one or more second serving cells include the third serving cell, the LP-WUS monitoring resources are located on the plural serving cells.

In some embodiments, if the one or more second serving cells include the one or more serving cells or serving cell groups associated with the third serving cell, the one or more LP-WUS monitoring resources are located on the one or plural serving cells.

In some embodiments, if the one or more second serving cells include the one or more serving cells or serving cell groups associated with the LP-WUS, the one or more LP-WUS monitoring resources are located on one serving cell or bandwidth part or frequency band.

In some embodiments, the first communication unit 801 is further configured to: if the one or more second serving cells include the one or more serving cells or serving cell groups associated with the third serving cell, receive first configuration information transmitted by the network device, here, the first configuration information is used for configuring serving cell(s) or serving cell group(s) associated with each of one or more serving cells.

In some embodiments, the first communication unit 801 is further configured to: if the one or more second serving cells include the one or more serving cells or serving cell groups associated with the LP-WUS, receive second configuration information transmitted by the network device, here, the second configuration information is used for configuring serving cell(s) or serving cell group(s) associated with each of one or more LP-WUSs.

In some embodiments, the LP-WUS is configured for resuming the monitoring of the PDCCH by the MR of the terminal device on the one or more first serving cells.

In some embodiments, the terminal device is in a PDCCH skipping duration on the first serving cell at a first time, the first time is a time when the terminal device receives the LP-WUS or a time corresponding to a time offset after the terminal device receives the LP-WUS, and the time offset is a duration required for a low power receiver of the terminal device to wake up the MR.

In some embodiments, the LP-WUS is used for controlling the MR of the terminal device to perform search space set group switching on the one or more first serving cells.

In some embodiments, the one or more first serving cells include all of the one or more second serving cells.

In some embodiments, if the one or more second serving cells include one or more serving cell groups associated with the third serving cell, the one or more serving cell groups associated with the third serving cell are a serving cell group to which the third serving cell belongs.

In some embodiments, the terminal device 800 further includes a monitoring unit, configured to monitor, based on the LP-WUS, a PDCCH on a first search space (SS) or search space set group (SSSG) on an active downlink bandwidth part (DL BWP) of the first serving cell.

In some embodiments, the first SS or SSSG is one of: an SS or SSSG predefined by a protocol; an SS or SSSG indicated by the network device; or an SS or SSSG determined based on a second SS or SSSG, here, the second SS or SSSG is an SS or SSSG for a last PDCCH monitoring before entering an LP-WUS monitoring state.

In some embodiments, if the first SS or SSSG is determined based on the second SS or SSSG, the first SS or SSSG is the second SS or SSSG.

The first communication unit in the terminal device may be implemented by a transceiver in the terminal device. It can be understood that the monitoring unit in the terminal device may be implemented by a processor in the terminal device.

FIG. 9 is a first diagram of structure composition of a network device provided by an embodiment of the present disclosure. As illustrated in FIG. 9, the network device 900 includes a second communication unit 901, configured to transmit a low power wake-up signal (LP-WUS) to a terminal device. Here, the LP-WUS is used for controlling transmission of physical downlink control channel (PDCCH) by the network device on one or more first serving cells, and multiple serving cells of the terminal device include the one or more first serving cells.

In some embodiments, the one or more first serving cells are all or part of one or more second serving cells; and the one or more second serving cells are the multiple serving cells of the terminal device or are associated with the LP-WUS.

In some embodiments, the one or more second serving cells comprise one of: a third serving cell, here, the third serving cell is a serving cell on which the LP-WUS is received; one or more serving cells or serving cell groups associated with the third serving cell; one or more serving cells or serving cell groups associated with the LP-WUS; one or more serving cells or serving cell groups indicated by the LP-WUS; or the multiple serving cells of the terminal device.

In some embodiments, the second communication unit 901 is further configured to transmit LP-WUS configuration information to the terminal device, here, the LP-WUS configuration information is used for configuring one or more LP-WUS monitoring resources.

In some embodiments, the one or more LP-WUS monitoring resources are located on one or plural serving cells.

In some embodiments, if the one or more second serving cells include the third serving cell, the LP-WUS monitoring resources are located on the plural serving cells.

In some embodiments, if the one or more second serving cells include the one or more serving cells or serving cell groups associated with the third serving cell, the one or more LP-WUS monitoring resources are located on the one or plural serving cells.

In some embodiments, if the one or more second serving cells include the one or more serving cells or serving cell groups associated with the LP-WUS, the one or more LP-WUS monitoring resources are located on one serving cell or bandwidth part or frequency band.

In some embodiments, the second communication unit 901 is further configured to: if the one or more second serving cells include the one or more serving cells or serving cell groups associated with the third serving cell, transmit first configuration information to the terminal device, here, the first configuration information is used for configuring serving cell(s) or serving cell group(s) associated with each of one or more serving cells.

In some embodiments, the second communication unit 901 is further configured to: if the one or more second serving cells include the one or more serving cells or serving cell groups associated with the LP-WUS, transmit second configuration information to the terminal device, here, the second configuration information is used for configuring serving cell(s) or serving cell group(s) associated with each of one or more LP-WUSs.

In some embodiments, the LP-WUS is used for resuming the transmission of the PDCCH by the network device on the one or more first serving cells.

In some embodiments, the terminal device is in a PDCCH skipping duration on the first serving cell at a first time, where the first time is a time when the terminal device receives the LP-WUS or a time corresponding to a time offset after the terminal device receives the LP-WUS, and the time offset is a duration required for a low power receiver of the terminal device to wake up a main radio.

In some embodiments, the LP-WUS is used for controlling the network device to perform search space set group switching on the one or more first serving cells.

In some embodiments, the one or more first serving cells include all of the one or more second serving cells.

In some embodiments, if the one or more second serving cells include one or more serving cell groups associated with the third serving cell, the one or more serving cell groups associated with the third serving cell are a serving cell group to which the third serving cell belongs.

In some embodiments, the second communication unit is further configured to transmit, based on the LP-WUS, a PDCCH on a first search space (SS) or search space set group (SSSG) on an active downlink bandwidth part (DL BWP) of the first serving cell.

In some embodiments, the first SS or SSSG is one of: an SS or SSSG predefined by a protocol; an SS or SSSG indicated by the network device; or an SS or SSSG determined based on a second SS or SSSG, here, the second SS or SSSG is an SS or SSSG for a last PDCCH monitoring before entering an LP-WUS monitoring state.

In some embodiments, if the first SS or SSSG is determined based on the second SS or SSSG, the first SS or SSSG is the second SS or SSSG.

The second communication unit in the network device may be implemented by a transceiver in the network device. It can be understood that the network device may further include a determination unit, configured to determine the LP-WUS. The determination unit may be implemented by a processor in the network device.

Those skilled in the art should understand that the related description of the above-described terminal device or network device according to the embodiments of the present disclosure can be understood with reference to the related description of the wireless communication methods according to the embodiments of the present disclosure.

FIG. 10 is a structural diagram of a communication device 1000 provided by an embodiment of the present disclosure. The communication device may be a terminal device or a network device. The communication device 1000 illustrated in FIG. 10 includes a processor 1010 that can invoke and execute a computer program from a memory to implement the methods in the embodiments of the present disclosure.

Optionally, as illustrated in FIG. 10, the communication device 1000 may further include a memory 1020. Here, the processor 1010 may invoke and execute a computer program from the memory 1020 to implement the methods in the embodiments of the present disclosure.

Here, the memory 1020 may be a separate device independent of the processor 1010, or may be integrated in the processor 1010.

Optionally, as illustrated in FIG. 10, the communication device 1000 may further include a transceiver 1030. The processor 1010 may control the transceiver 1030 to communicate with other devices, specifically, may transmit information or data to other devices or receive information or data transmitted by other devices.

Here, the transceiver 1030 may include a transmitter and a receiver. The transceiver 1030 may further include antenna(s), and the number of antennas may be one or more.

Optionally, the communication device 1000 may specifically be the network device according to the embodiments of the present disclosure, and the communication device 1000 may implement corresponding processes implemented by the network device in each method of the embodiments of the present disclosure, which will not be described again here for simplicity.

Optionally, the communication device 1000 may specifically be the mobile terminal/terminal device according to the embodiments of the present disclosure, and the communication device 1000 may implement corresponding processes implemented by the mobile terminal/terminal device in each method of the embodiments of the present disclosure, which will not be described again here for simplicity.

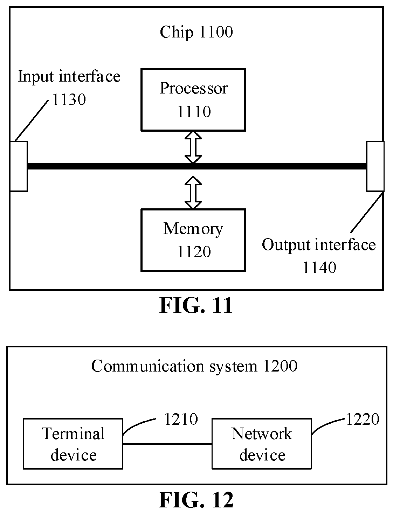

FIG. 11 is a structural diagram of a chip according to an embodiment of the present disclosure. The chip 1100 illustrated in FIG. 11 includes a processor 1110 that can invoke and execute a computer program from a memory to implement the methods in the embodiments of the present disclosure.

Optionally, as illustrated in FIG. 11, the chip 1100 may further include a memory 1120. Here, the processor 1110 may invoke and execute a computer program from the memory 1120 to implement the methods in the embodiments of the present disclosure.

Here, the memory 1120 may be a separate device independent of the processor 1110, or may be integrated in the processor 1110.

Optionally, the chip 1100 may also include an input interface 1130. Here, the processor 1110 may control the input interface 1130 to communicate with other devices or chips, specifically, may acquire information or data transmitted by other devices or chips.

Optionally, the chip 1100 may also include an output interface 1140. The processor 1110 may control the output interface 1140 to communicate with other devices or chips, specifically, may output information or data to other devices or chips.

Optionally, the chip can be applied to the network device in the embodiments of the present disclosure, and the chip can implement the corresponding processes implemented by the network device in each method of the embodiments of the present disclosure, which will not be described again here for simplicity.

Optionally, the chip can be applied to the mobile terminal/terminal device in the embodiments of the present disclosure, and the chip can implement the corresponding processes implemented by the mobile terminal/terminal device in each method of the embodiments of the present disclosure, which will not be described again here for simplicity.

It should be understood that the chip mentioned in the embodiments of the present disclosure may also be referred to as a system-level chip, a system chip, a chip system, a system-on-chip, or the like.

FIG. 12 is a block diagram of a communication system 1200 provided by an embodiment of the present disclosure. As illustrated in FIG. 12, the communication system 1200 includes a terminal device 1210 and a network device 1220.

Here, the terminal device 1210 may be used to implement the corresponding functions implemented by the terminal device in the above-described methods, and the network device 1220 may be used to implement the corresponding functions implemented by the network device in the above-described methods, which will not be described again here for simplicity.

It should be understood that the processor in the embodiments of the present disclosure may be an integrated circuit chip having signal processing capability. During the implementation, the operations of the above-described method embodiments may be completed by hardware integrated logic circuitry or instructions in the form of software in the processor. The processor may be a general-purpose processor, a digital signal processor (DSP), an application specific integrated circuit (ASIC), a field programmable gate array (FPGA) or another programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The operations of the methods disclosed in connection with the embodiments of the present disclosure may be directly embodied as being executed by a hardware decoding processor, or may be executed by a combination of hardware and software modules in a decoding processor. The software modules may be located in a storage medium mature in the art, such as a random access memory, a flash memory, a read-only memory, a programmable read-only memory, or an electrically erasable programmable memory, a register, and the like. The storage medium is located in the memory, and the processor reads the information from the memory, and completes the operations of the methods in combination with its hardware.

It can be understood that the memory in the embodiments of the present disclosure may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EPROM), or a flash memory. The volatile memory may be a random access memory (RAM), which serves as an external cache. By way of illustration, but not limitation, many forms of RAMs are available, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory of the systems and methods described herein is intended to include, but is not limited to, these and any other suitable types of memory.

It should be understood that the above-described memories are exemplary but not limiting. For example, the memory in the embodiments of the present disclosure may also be an SRAM, a DRAM, an SDRAM, a DDR SDRAM, an ESDRAM, a SLDRAM, a DR RAM, or the like. That is, the memory in embodiments of the present disclosure is intended to include, but is not limited to, these and any other suitable types of memory.

Embodiments of the present disclosure also provide a computer-readable storage medium for storing a computer program.

Optionally, the computer-readable storage medium can be applied to the network device in the embodiments of the present disclosure, and the computer program causes a computer to execute corresponding processes implemented by the network device in each method of the embodiments of the present disclosure, which will not be described again here for simplicity.

Optionally, the computer-readable storage medium can be applied to the mobile terminal/terminal device in the embodiments of the present disclosure, and the computer program causes a computer to execute corresponding processes implemented by the mobile terminal/terminal device in each method of the embodiments of the present disclosure, which will not be described again here for simplicity.

Embodiments of the present disclosure also provide a computer program product including computer program instructions.

Optionally, the computer program product can be applied to the network device in the embodiments of the present disclosure, and the computer program instructions cause a computer to execute the corresponding processes implemented by the network device in each method of the embodiments of the present disclosure, which will not be described again here for simplicity.

Optionally, the computer program product can be applied to the mobile terminal/terminal device in the embodiments of the present disclosure, and the computer program instructions cause a computer to execute the corresponding processes implemented by the mobile terminal/terminal device in each method of the embodiments of the present disclosure, which will not be described again here for simplicity.

Embodiments of the present disclosure also provide a computer program.

Optionally, the computer program can be applied to the network device in the embodiments of the present disclosure, and the computer program, when run on a computer, causes the computer to execute the corresponding processes implemented by the network device in each method of the embodiments of the present disclosure, which will not be described again here for simplicity.

Optionally, the computer program can be applied to the mobile terminal/terminal device in the embodiments of the present disclosure, and the computer program, when run on a computer, causes the computer to execute the corresponding processes implemented by the mobile terminal/terminal device in each method of the embodiments of the present disclosure, which will not be described again here for simplicity.

Those of ordinary skill in the art will recognize that the units and algorithm operations of the various examples described in connection with the embodiments disclosed herein can be implemented in electronic hardware, or a combination of computer software and electronic hardware. Whether these functions are performed in hardware or software depends on the specific application and design constraints of the technical solutions. A person skilled in the art may use a different method for each specific application to implement the described functions, but such implementation should not be considered beyond the scope of the present disclosure.

Those skilled in the art can clearly understand that for convenience and simplicity of the description, regarding the specific working processes of the above-described systems, devices/apparatuses, and units, the reference can be made to the corresponding processes in the above-described method embodiments, and will not be described again here.

In the several embodiments provided by the present disclosure, it should be understood that the disclosed systems, devices/apparatuses, and methods may be implemented in other ways. For example, the device embodiments described above are merely illustrative. For example, the division of the units is merely a logical function division, and there may be other division methods in actual implementation. For example, multiple units or components may be combined or integrated into another system, or some features may be ignored or not implemented. In another aspect, the couplings or direct couplings or communication connections illustrated or discussed between each other may be indirect couplings or communication connections through some interfaces, devices or units, and may be in electrical, mechanical or other forms.

The units described as separate components may or may not be physically separated, and the components illustrated as units may or may not be physical units, i.e., may be located in one place, or may be distributed over multiple network units. Part or all of the units may be selected according to actual needs to achieve the purpose of the solutions of the present embodiments.

In addition, the functional units in the embodiments of the present disclosure may be integrated in one processing unit, or each unit may physically exist alone, or two or more units may be integrated in one unit.

The functions, if implemented in the form of software functional units and are sold or used as stand-alone products, may be stored in a computer readable storage medium. Based on such understanding, the technical solution of the present disclosure in essence, or the part that contributes to the related art, or a part of the technical solution may be embodied in the form of a software product. The computer software product is stored in a storage medium and includes several instructions for causing a computer device (which may be a personal computer, a server, or a network device, or the like) to perform all or part of the operations of the methods described in various embodiments of the present disclosure. The storage medium includes various media capable of storing program code, such as a USB flash drive, a mobile hard disk, a ROM, a RAM, a magnetic disk or an optical disk.

The above descriptions are merely specific implementations of the present disclosure, but the protection scope of the present disclosure is not limited thereto. Any person skilled in the art may readily conceive of variations or substitutions within the technical scope disclosed in the present disclosure, and such variations or substitutions shall all fall within the protection scope of the present disclosure. Therefore, the protection scope of the present disclosure shall be subject to the protection scope of the claims.

## Claims

1. A wireless communication method, comprising:
receiving, by a terminal device, a low power wake-up signal (LP-WUS) transmitted by a network device, wherein the LP-WUS is used for controlling monitoring of physical downlink control channel (PDCCH) by a main radio (MR) of the terminal device on one or more first serving cells, and wherein a plurality of serving cells of the terminal device comprise the one or more first serving cells.

2. The method of claim 1, wherein the one or more first serving cells are all or part of one or more second serving cells, and wherein the one or more second serving cells are the plurality of serving cells of the terminal device or are associated with the LP-WUS.

3. The method of claim 2, wherein the one or more second serving cells comprise one of:
a third serving cell, the third serving cell being a serving cell on which the LP-WUS is received;
one or more serving cells or serving cell groups associated with the third serving cell;
one or more serving cells or serving cell groups associated with the LP-WUS;
one or more serving cells or serving cell groups indicated by the LP-WUS; or
the plurality of serving cells of the terminal device.

4. The method of claim 3, further comprising:
receiving, by the terminal device, LP-WUS configuration information transmitted by the network device, wherein the LP-WUS configuration information is used for configuring one or more LP-WUS monitoring resources.

5. The method of claim 4, wherein the one or more LP-WUS monitoring resources are located on one or plural serving cells.

6. The method of claim 5, wherein if the one or more second serving cells comprise the third serving cell, the one or more LP-WUS monitoring resources are located on the plural serving cells.

7. The method of claim 5, wherein if the one or more second serving cells comprise the one or more serving cells or serving cell groups associated with the third serving cell, the one or more LP-WUS monitoring resources are located on the one or plural serving cells.

8. The method of claim 4, wherein if the one or more second serving cells comprise the one or more serving cells or serving cell groups associated with the LP-WUS, the one or more LP-WUS monitoring resources are located on one serving cell or bandwidth part or frequency band.

9. The method of any one of claims 3 to 5, and 7, wherein if the one or more second serving cells comprise the one or more serving cells or serving cell groups associated with the third serving cell, the method further comprises:
receiving, by the terminal device, first configuration information transmitted by the network device, wherein the first configuration information is used for configuring serving cell(s) or serving cell group(s) associated with each of one or more serving cells.

10. The method of any one of claims 3 to 5, and 8, wherein if the one or more second serving cells comprise the one or more serving cells or serving cell groups associated with the LP-WUS, the method further comprises:
receiving, by the terminal device, second configuration information transmitted by the network device, wherein the second configuration information is used for configuring serving cell(s) or serving cell group(s) associated with each of one or more LP-WUSs.

11. The method of any one of claims 2 to 10, wherein the LP-WUS is used for resuming the monitoring of the PDCCH by the MR of the terminal device on the one or more first serving cells.

12. The method of claim 11, wherein at a first time, the terminal device is in a PDCCH skipping duration on the first serving cell, wherein
the first time is a time when the terminal device receives the LP-WUS or a time corresponding to a time offset after the terminal device receives the LP-WUS, the time offset being a duration required for a low power receiver of the terminal device to wake up the MR.

13. The method of any one of claims 2 to 10, wherein the LP-WUS is used for controlling the MR of the terminal device to perform search space set group switching on the one or more first serving cells.

14. The method of claim 13, wherein the one or more first serving cells comprise all of the one or more second serving cells.

15. The method of claim 13 or 14, wherein if the one or more second serving cells comprise one or more serving cell groups associated with the third serving cell, the one or more serving cell groups associated with the third serving cell are a serving cell group to which the third serving cell belongs.

16. The method of any one of claims 13 to 15, further comprising:
monitoring, by the terminal device, based on the LP-WUS, a PDCCH on a first search space (SS) or search space set group (SSSG) on an active downlink bandwidth part (DL BWP) of the first serving cell.

17. The method of claim 16, wherein the first SS or SSSG is one of:
an SS or SSSG predefined by a protocol;
an SS or SSSG indicated by the network device; or
an SS or SSSG determined based on a second SS or SSSG, the second SS or SSSG being an SS or SSSG for a last PDCCH monitoring before entering an LP-WUS monitoring state.

18. The method of claim 17, wherein if the first SS or SSSG is determined based on the second SS or SSSG, the first SS or SSSG is the second SS or SSSG.

19. A wireless communication method, comprising:
transmitting, by a network device, a low power wake-up signal (LP-WUS) to a terminal device, wherein the LP-WUS is used for controlling transmission of physical downlink control channel (PDCCH) by the network device on one or more first serving cells, and wherein a plurality of serving cells of the terminal device comprise the one or more first serving cells.

20. The method of claim 19, wherein the one or more first serving cells are all or part of one or more second serving cells, and wherein the one or more second serving cells are the plurality of serving cells of the terminal device or are associated with the LP-WUS.

21. The method of claim 20, wherein the one or more second serving cells comprise one of:
a third serving cell, the third serving cell being a serving cell on which the LP-WUS is received;
one or more serving cells or serving cell groups associated with the third serving cell;
one or more serving cells or serving cell groups associated with the LP-WUS;
one or more serving cells or serving cell groups indicated by the LP-WUS; or
the plurality of serving cells of the terminal device.

22. The method of claim 21, further comprising:
transmitting, by the network device, LP-WUS configuration information to the terminal device, wherein the LP-WUS configuration information is used for configuring one or more LP-WUS monitoring resources.

23. The method of claim 22, wherein the one or more LP-WUS monitoring resources are located on one or plural serving cells.

24. The method of claim 23, wherein if the one or more second serving cells comprise the third serving cell, the one or more LP-WUS monitoring resources are located on the plural serving cells.

25. The method of claim 23, wherein if the one or more second serving cells comprise the one or more serving cells or serving cell groups associated with the third serving cell, the one or more LP-WUS monitoring resources are located on the one or plural serving cells.

26. The method of claim 22, wherein if the one or more second serving cells comprise the one or more serving cells or serving cell groups associated with the LP-WUS, the one or more LP-WUS monitoring resources are located on one serving cell or bandwidth part or frequency band.

27. The method of any one of claims 21 to 23, and 25, wherein if the one or more second serving cells comprise the one or more serving cells or serving cell groups associated with the third serving cell, the method further comprises:
transmitting, by the network device, first configuration information to the terminal device, wherein the first configuration information is used for configuring serving cell(s) or serving cell group(s) associated with each of one or more serving cells.

28. The method of any one of claims 21-23, and 26, wherein if the one or more second serving cells comprise the one or more serving cells or serving cell groups associated with the LP-WUS, the method further comprises:
transmitting, by the network device, second configuration information to the terminal device, wherein the second configuration information is used for configuring serving cell(s) or serving cell group(s) associated with each of one or more LP-WUSs.

29. The method of any one of claims 20 to 28, wherein the LP-WUS is used for resuming the transmission of the PDCCH by the network device on the one or more first serving cells.

30. The method of claim 29, wherein at a first time, the terminal device is in a PDCCH skipping duration on the first serving cell, wherein
the first time is a time when the terminal device receives the LP-WUS or a time corresponding to a time offset after the terminal device receives the LP-WUS, the time offset being a duration required for a low power receiver of the terminal device to wake up a main radio (MR).

31. The method of any one of claims 20 to 28, wherein the LP-WUS is used for controlling the network device to perform search space set group switching on the one or more first serving cells.

32. The method of claim 31, wherein the one or more first serving cells comprise all of the one or more second serving cells.

33. The method of claim 31 or 32, wherein if the one or more second serving cells comprise one or more serving cell groups associated with the third serving cell, the one or more serving cell groups associated with the third serving cell are a serving cell group to which the third serving cell belongs.

34. The method of any one of claims 31 to 33, further comprising:
transmitting, by the network device, based on the LP-WUS, a PDCCH on a first search space (SS) or search space set group (SSSG) on an active downlink bandwidth part (DL BWP) of the first serving cell.

35. The method of claim 34, wherein the first SS or SSSG is one of:
an SS or SSSG predefined by a protocol;
an SS or SSSG indicated by the network device; or
an SS or SSSG determined based on a second SS or SSSG, the second SS or SSSG being an SS or SSSG for a last PDCCH monitoring before entering an LP-WUS monitoring state.

36. The method of claim 35, wherein if the first SS or SSSG is determined based on the second SS or SSSG, the first SS or SSSG is the second SS or SSSG.

37. A terminal device, comprising:
a first communication unit, configured to receive a low power wake-up signal (LP-WUS) transmitted by a network device, wherein the LP-WUS is used for controlling monitoring of physical downlink control channel (PDCCH) by a main radio (MR) of the terminal device on one or more first serving cells, and wherein a plurality of serving cells of the terminal device comprise the one or more first serving cells.

38. A network device, comprising:
a second communication unit, configured to transmit a low power wake-up signal (LP-WUS) to a terminal device, wherein the LP-WUS is configured for controlling transmission of physical downlink control channel (PDCCH) by the network device on one or more first serving cells, and wherein a plurality of serving cells of the terminal device comprise the one or more first serving cells.

39. A terminal device, comprising a processor and a memory, wherein the memory is configured to store a computer program, and the processor is configured to invoke and execute the computer program stored in the memory to perform the method of any one of claims 1 to 18.

40. A network device, comprising a processor and a memory, wherein the memory is configured to store a computer program, and the processor is configured to invoke and execute the computer program stored in the memory to perform the method of any one of claims 19 to 36.

41. A chip, comprising a processor for invoking and executing a computer program from a memory to enable a device equipped with the chip to perform the method of any one of claims 1 to 18, or perform the method of any one of claims 19 to 36.

42. A computer-readable storage medium for storing a computer program that, when executed, causes a computer to perform the method of any one of claims 1 to 18, or perform the method of any one of claims 19 to 36.

43. A computer program product, comprising computer program instructions that, when executed, cause a computer to perform the method of any one of claims 1 to 18, or perform the method of any one of claims 19 to 36.

44. A computer program that, when executed, causes a computer to perform the method of any one of claims 1 to 18, or perform the method of any one of claims 19 to 36.
